(19) **Europäisches Patentamt European Patent Office Office européen des brevets**

(11) **EP 3 886 585 B1**

(12) **FASCICULE DE BREVET EUROPEEN**

(45) Date de publication et mention de la délivrance du brevet:
**01.07.2026 Bulletin 2026/27**

(21) Numéro de dépôt: **19868192.6**

(22) Date de dépôt: **27.11.2019**

(51) Classification Internationale des Brevets (IPC):
*A01N 37/36* (2006.01)    *A01P 1/00* (2006.01)
*A01P 3/00* (2006.01)    *A01P 5/00* (2006.01)
*A01P 7/04* (2006.01)

(52) Classification Coopérative des Brevets (CPC):
(C-Sets disponibles)
**A01N 37/36**    (Cont.)

(86) Numéro de dépôt international:
**PCT/FR2019/052826**

(87) Numéro de publication internationale:
**WO 2020/109729 (04.06.2020 Gazette 2020/23)**

(54) **NOUVELLE COMPOSITION POUR LA DÉFENSE DES PLANTES CONTRE DES AGENTS PATHOGÈNES**

NEUE ZUSAMMENSETZUNG ZUM SCHUTZ VON PFLANZEN GEGEN PATHOGENE

NEW COMPOSITION FOR PROTECTING PLANTS FROM PATHOGENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2018 FR 1872017**

(43) Date de publication de la demande:
**06.10.2021 Bulletin 2021/40**

(73) Titulaires:
- **Societe de Distribution et de Prestation de Services SDP**
  **02000 Laon (FR)**
- **Institut national de recherche pour l'agriculture l'alimentation et l'environnement**
  **75007 Paris (FR)**

(72) Inventeurs:
- **ERNENWEIN, Cédric**
  **02290 Montigny-Lengrain (FR)**
- **BAKAN, Bénédicte**
  **44300 Nantes (FR)**
- **MARION, Didier**
  **44300 Nantes (FR)**
- **KELLER, Cyril**
  **75012 Paris (FR)**

(74) Mandataire: **Grosset-Fournier, Chantal Catherine et al**
**Grosset-Fournier & Demachy**
**54, rue Saint-Lazare**
**75009 Paris (FR)**

(56) Documents cités:
**WO-A2-2004/010782**

- **DATABASE CAPLUS [online] CHEMICAL ABSTRACTS SERVICE, COLUMBUS, OHIO, US; SCHWEIZER, P. ET AL: "Induction of resistance in barley against Erysiphe graminis f.sp. hordei by free cutin monomers", XP002792325, retrieved from STN Database accession no. 1996:704388**
- **SCHWEIZER, P. ET AL: "Induction of resistance in barley against Erysiphe graminis f.sp. hordei by free cutin monomers", PHYSIOLOGICAL AND MOLECULAR PLANT PATHOLOGY , 49(2), 103-120 CODEN: PMPPEZ; ISSN: 0885-5765, 1996, DOI: 10.1006/PMPP.1996.0043 10.1006/ PMPP.1996.0043**

- DATABASE CAPLUS [online] CHEMICAL ABSTRACTS SERVICE, COLUMBUS, OHIO, US; BUXDORF, KOBI ET AL: "The transcription factor SISHINE3 modulates defense responses in tomato plants", XP002792326, retrieved from STN Database accession no. 2013:1271527
- BUXDORF, KOBI ET AL: "The transcription factor SISHINE3 modulates defense responses in tomato plants", PLANT MOLECULAR BIOLOGY , 84(1-2), 37-47 CODEN: PMBIDB; ISSN: 0167-4412, 2014, DOI: 10.1007/S11103-013-0117-1 10.1007/S11103-013-0117-1
- DATABASE CAPLUS [online] CHEMICAL ABSTRACTS SERVICE, COLUMBUS, OHIO, US; PROST, ISABELLE ET AL: "Evaluation of the antimicrobial activities of Plant oxylipins supports their involvement in defense against pathogens", XP002792327, retrieved from STN Database accession no. 2005:1355312
- PROST, ISABELLE ET AL: "Evaluation of the antimicrobial activities of Plant oxylipins supports their involvement in defense against pathogens", PLANT PHYSIOLOGY , 139(4), 1902-1913 CODEN: PLPHAY; ISSN: 0032-0889, 2005, DOI: 10.1104/PP.105.066274 10.1104/ PP.105.066274
- DATABASE CAPLUS [online] CHEMICAL ABSTRACTS SERVICE, COLUMBUS, OHIO, US; BESSIRE, MICHAEL ET AL: "A permeable cuticle in Arabidopsis leads to a strong resistance to Botrytis cinerea", XP002792328, retrieved from STN Database accession no. 2007:430703
- BESSIRE, MICHAEL ET AL: "A permeable cuticle in Arabidopsis leads to a strong resistance to Botrytis cinerea", EMBO JOURNAL , 26(8), 2158-2168 CODEN: EMJODG; ISSN: 0261-4189, 2007, DOI: 10.1038/SJ.EMBOJ.7601658 10.1038/ SJ.EMBOJ.7601658

(52) Classification Coopérative des Brevets (CPC): (Cont.)

C-Sets
**A01N 37/36, A01N 37/36**

**Description**

La présente invention concerne une nouvelle composition pour la défense des plantes contre des agents pathogènes.

Les maladies des plantes peuvent être dues à divers organismes : champignons, oomycètes, bactéries, virus, viroïdes, phytoplasmes, protozoaires, nématodes, insectes et plantes parasites.

Les champignons sont la principale cause de maladies chez les plantes et sont responsables d'environ 70 % des maladies des plantes cultivées. On estime entre dix mille et quinze mille espèces le nombre d'organismes du type champignons ou pseudo-champignons susceptibles d'infecter les plantes (contre une cinquantaine susceptible d'infecter l'homme).

Les pertes économiques annuelles dues aux maladies fongiques dans l'agriculture mondiale, avant et après la récolte, étaient estimées en 2003 à plus de 200 milliards d'euros, et le coût annuel des traitements fongicides s'élève pour les seuls États-Unis à plus de 600 millions de dollars. Le marché global des pesticides représente en 2017 plus de 54 milliards de dollars, dont 30% sont représentés par les fongicides (source Agrow ( 2018), *Données de marché sur les produits phytosanitaires.* Agrow.). Les champignons phytopathogènes sont des espèces de champignons parasites qui provoquent des maladies cryptogamiques chez les plantes. Ils sont capables d'infecter n'importe quel tissu à n'importe quel stade de croissance de la plante, en suivant un cycle biologique complexe qui peut comporter des stades de reproduction sexuée ou asexuée.

La lutte contre les maladies des plantes constitue un enjeu important et peut prendre différentes formes, notamment la prévention, les méthodes de lutte chimique ou biologique.

L'évolution attendue à la fois par les agriculteurs, les consommateurs et par le législateur, est de réduire drastiquement la part des intrants chimiques en agriculture, de limiter les risques toxicologiques et écotoxicologiques, d'éliminer toutes traces de résidus chimiques sur la culture consommée ou transformée, et de limiter les risques de résistance aux pathogènes. Les produits de biocontrôle, se substituant peu à peu aux pesticides chimiques permettent de répondre tout ou partie à ces préoccupations et représentent donc une solution d'avenir. Le Biocontrôle est un ensemble de méthodes de protection des végétaux basé sur l'utilisation de mécanismes naturels. Il comprend à la fois les macro-organismes, les micro-organismes, les médiateurs chimiques, les substances naturelles d'origine végétale, animale ou minérale. Parmi les molécules naturelles, certaines vont protéger la plante contre des agressions biotiques ou abiotiques en renforçant ses défenses naturelles. Il est en effet connu que les plantes sont capables de réagir à une agression par l'intermédiaire d'une reconnaissance moléculaire et de mettre en œuvre un mécanisme de défense ciblé. Certaines molécules, nommées éliciteurs ou stimulateur de défenses naturelles (SDN), sont donc capables d'induire une cascade de réactions de défense biologique. Il existe deux types de reconnaissance lors d'une agression biotique. D'une part une reconnaissance gène pour gène, dans laquelle un éliciteur spécifique, produit du gène d'avirulence du pathogène, est reconnu par un récepteur codé par le gène de résistance de la plante et d'autre part une reconnaissance d'éliciteurs généraux. Ces éliciteurs peuvent être exogènes, provenant directement de l'agent pathogène, ou endogènes c'est-à-dire issus de la plante elle-même. Ces derniers peuvent être libérés une fois que la cellule a été attaquée, notamment lors de la dégradation de la paroi cellulaire. Les éliciteurs exogènes sont par exemple des β-glucanes ou la chitine issus de la paroi des champignons agresseurs. Les éliciteurs endogènes peuvent être des fragments de polysaccharides ou des oligogalacturonides issus de la dégradation de la pectine, des glycoprotéines ou des peptides.

A la suite de cette reconnaissance de l'agression, de nombreux phénomènes chimiques sont provoqués et interagissent tous ensemble pour construire une réponse. Cette réponse fait suite à la synthèse d'hormones signales qui sont l'acide salicylique (SA), l'acide jasmonique (JA), l'éthylène et l'acide abscissique (ABA). De manière rapide, et dans certain cas, une réponse locale et intense peut avoir lieu, cette réaction hypersensible (HR), permet de confiner le pathogène et éviter sa progression, et va localement provoquer la mort de la cellule hôte. Cette réponse, provoquée par la production intensive de molécules d'oxygène actif (ou ROS pour Reactiv Oxygen species), est en général le résultat d'une reconnaissance par un éliciteur spécifique plutôt que général et plutôt contre les pathogènes à tendance biotrophe tels que les rouilles ou les oïdiums. Une résistance s'installe localement autours des lésions, permettant une insensibilité aux futures attaques, et cette résistance peut se propager à l'ensemble de la plante de manière systémique. On parlera alors de résistance systémique acquise (RSA) et de résistance systémique induite (RSI), permettant de protéger la plante contre un large éventail de bio-agresseurs. Les protéines PR (pour Pathogenesis-Related) synthétisées par des réactions biochimiques induites par la voie de l'acide salicylique vont se propager près du site d'infection mais aussi dans toute la plante.

L'acquisition de cette résistance systémique va permettre à la plante d'être prête à riposter plus efficacement en cas d'attaque. Un délai de quelques heures à quelques jours (en général de 24 à 48 heures) est nécessaire pour sa mise en place mais cette résistance peut ensuite s'exprimer durant plusieurs jours ou plusieurs semaines (Gozzo, J. Agric. Food Chem. 2003, 51, 4487-4503).

Les éliciteurs proposés sur le marché du biocontrôle sont des dérivés de phyto-hormones de synthèses, des extraits de polysaccharides (extraits d'algues ou de pectine ou obtenus par fermentation), des chitosanes, des produits minéraux, des extraits fermentaires ou des micro-organismes.

La présente demande d'invention souhaite proposer de nouveaux éliciteurs à partir de molécules issues de la cuticule des plantes. La cuticule est un film hydrophobe recouvrant les cellules épithéliales de toutes plantes supérieures. Elle est donc située à l'interface entre la plante et son environnement aérien, elle constitue ainsi à la fois une zone d'échanges et de protection de la plante. La fonction principale de la cuticule est de limiter les pertes d'eau au niveau des tissus par évaporation. Elle permet également une protection physique de la plante contre les rayonnements UV, les pathogènes et les insectes (Markus Riederer, Biology of plant cuticle, 2006, Annual Plant Reviews, Volume 23. Wiley-Blackwell. ISBN 9781405132688). La cuticule est un biocomposite qui contient des cires, la cutine, ainsi que des polysaccharides associés à la cutine. Les monomères constituant la cutine sont des acides gras à longues chaînes carbonées (16 ou 18 carbones), généralement hydroxylés en fin de chaîne carbonée ($\omega$-OH) et une ou plusieurs fois en milieu de chaîne (Fich, Segerson, & Rose, 2016 Annu. Rev. Plant Biol. 2016. 67:207-33). Les acides 16-hydroxyhexadecanoïque, 10,16-dihydroxyhexadécanoïque, 16-hydroxy-10-oxo-hexadecanoïque, 10-hydroxyhexadecanedioïque, 18-hydroxyoctadec-9-enoïque, 18-hydroxy-9,10-epoxyoctadecanoïque, 9,10,18-trihydroxyoctadecanoïque, ou acide coumarique sont des exemples de monomères constitutifs de la cutine (Fich et al., Annu. Rev. Plant Biol. 2016. 67:207-33).

Les monomères de cutine sont libérés lors d'attaques de pathogène sous l'action d'une production d'enzyme cutinase produite par le pathogène. Ce sont des molécules signal perçues à la fois par le pathogène et par la plante (Serano et al, 2014, Frontiers in Plante Science, June 2014, Volume5, Article 274).

Les acides gras $\omega$-hydroxylés, sont donc des molécules d'intérêt pour la diffusion du signal et la production d'une réponse de défense face aux agressions. Néanmoins, les quantités produites par les pathogènes eux-mêmes sous l'action d'enzymes spécifiques cutinase, ne permettent pas une protection suffisante de la plante infectée car les quantités libérées sont trop faibles, et la diffusion dans la plante limitée. Le besoin en produit concentré en acides gras $\omega$-hydroxylés est donc primordial et la présente demande d'invention souhaite résoudre ce problème technique en proposant des compositions concentrées en acides gras $\omega$-hydroxylés pour la défense des plantes contre des agents pathogènes, ces compositions ne présentant pas de toxicité pour l'Homme et l'environnement.

Schweizer et al. (Physiological and Molecular Plant Pathology 1996, 49, 103-120) décrit l'utilisation de diverses molécules, notamment des dérivés hydroxylés de l'acide palmitique (C16), pour induire la résistance de l'avoine contre *E. graminis.*

Buxdorf et al. (Plant Mol Biol, 2014, 84 :34-47) étudie l'accumulation de monomères de cutine dans la défense de la tomate contre divers champignons pathogènes, des dérivés hydroxylés de l'acide palmitique (C16) sont mentionnés dans le mélange extraits de monomères.

Prost et al. (Plant Physiology, December 2005, Vol.139, pp. 1902-1913) concerne les effets antimicrobiens d'un dérivé trihydroxylé de l'acide palmitique (C16) sur la défense des plantes. Bessire et al. (The EMBO Journal, Vol 26, No8, 2007) décrit un monomère de cutine, dérivé hydroxylé de l'acide palmitique C16, présent chez Arabidopsis induisant une résistance de la plante contre *B. cinerea.*

La demande WO2004/010782 A2 concerne la lutte contre la propagation des virus par les pucerons à l'aide d'une composition contenant des esters d'acides carboxyliques et des alcools contenant une chaine carbonée de plus de 14 carbones.

Dans ces cinq documents ci-dessus, aucun sel d'amine, en particulier aucun sel de carboxylate d'acides aminés, n'est mentionné.

L'un des buts de l'invention est de fournir une composition phytosanitaire pour la défense des plantes contre des agents pathogènes.

Un autre but de l'invention est de fournir une composition phytosanitaire dont la substance active peut provenir de différents végétaux.

Un autre but de l'invention est de fournir une composition phytosanitaire dont la substance active est non-toxique pour l'Homme et l'environnement.

Un autre but de l'invention est de fournir une composition phytosanitaire pouvant être utilisée sur les grandes cultures, le maraichage, les arbres fruitiers, la vigne et les plantes d'ornement.

La présente description est relative à l'utilisation d'une composition comprenant au moins un acide gras $\omega$-hydroxylé linéaire ou ramifié ou un de ses dérivés, de formule $(HO)C_nH_{2n-m-2p}(OH)_mCOOR$,

n étant un entier de 7 à 21, de préférence de 13 à 19, plus préférablement de 15 à 17,

m étant un entier supérieur ou égal à 0, de préférence de 1 à 3, plus préférablement égal à 1,

p représentant le nombre d'insaturations contenues dans le dit acide gras et étant un entier de 0 à 3, de préférence égal à 0,

R étant un hydrogène ou un groupement M ou $R_5$,

M représentant un contre-ion métallique lié de façon non covalente à l'anion $(HO)C_nH_{2n-m-2p}(OH)_mCOO^-$, notamment choisi parmi le sodium, le potassium, le lithium,

ou un cation organique, contenant un atome d'azote, d'oxygène ou de carbone protonés, étant de préférence un ammonium quaternaire de formule $R_1R_2R_3R_4N^+$, avec $R_1$, $R_2$, $R_3$ et $R_4$ pouvant être indépendamment un atome d'hydrogène ou un composé à chaine aliphatique linéaire ou ramifiée comportant de 1 à 18 atomes de carbone, $R_5$ représentant une chaine aliphatique linéaire ou ramifiée comportant de 1 à 18 atomes de carbones,

ou un mélange desdits acides gras $\omega$-hydroxylés linéaires ou ramifiés ou desdits dérivés,
pour la défense des plantes contre des agents pathogènes.

La présente description est relative à l'utilisation d'une composition comprenant au moins un dérivé d'acide gras $\omega$-hydroxylé linéaire ou ramifié, ledit dérivé ayant la formule $(HO)C_nH_{2n-m-2p}(OH)_mCOOR$,
n étant un entier de 7 à 21, de préférence de 13 à 19, plus préférablement de 15 à 17,

m étant un entier supérieur ou égal à 0, de préférence de 1 à 3, plus préférablement égal à 1, p représentant le nombre d'insaturations contenues dans le dit acide gras et étant un entier de 0 à 3, de préférence égal à 0,

R étant un groupement M ou $R_5$,

M représentant un contre-ion métallique lié de façon non covalente à l'anion $(HO)C_nH_{2n-m-2p}(OH)_mCOO^-$, notamment choisi parmi le sodium, le potassium, le lithium,

ou un cation organique, contenant un atome d'azote, d'oxygène ou de carbone protonés, étant de préférence un ammonium quaternaire de formule $R_1R_2R_3R_4N^+$, avec $R_1$, $R_2$, $R_3$ et $R_4$ pouvant être indépendamment un atome d'hydrogène ou un composé à chaine aliphatique linéaire ou ramifiée comportant de 1 à 18 atomes de carbone ledit dérivé d'acide gras $\omega$-hydroxylé étant un sel d'acide gras,

$R_5$ étant une chaine aliphatique linéaire ou ramifiée comportant de 1 à 18 atomes de carbones,

ledit dérivé d'acide gras $\omega$-hydroxylé étant un ester d'acide gras,

ou ledit dérivé d'acide gras $\omega$-hydroxylé étant un oligomère formé par la condensation de 2 à 20, de préférence de 2 à 10, plus préférablement 2, 3 ou 4, acides $\omega$-hydroxylés de formule $(HO)C_nH_{2n-m-2p}(OH)_mCOOH$, liés par des fonctions ester,
ou un mélange desdits dérivés d'acides gras $\omega$-hydroxylés linéaires ou ramifiés,
pour la défense des plantes contre des agents pathogènes.

Un premier objet de l'invention concerne l'utilisation d'une composition comprenant au moins un sel d'acide gras $\omega$-hydroxylé linéaire ou ramifié ayant la formule $(HO)C_nH_{2n-m-2p}(OH)_mCOOM^+$,

n étant un entier de 15 à 17,
m étant un entier supérieur ou égal à 0, de préférence de 1 à 3, plus préférablement égal à 1,
p représentant le nombre d'insaturations contenues dans ledit acide gras et étant un entier de 0 à 3, de préférence égal à 0,
dans laquelle $M^+$ représente un acide aminé protoné notamment choisi parmi la L-lysine, la L-arginine, la L-histidine, la L-ornithine protonées ou un mélange desdits sels d'acide gras pour la défense des plantes contre des agents pathogènes.

Au sens de la présente invention, on entend par « acide gras $\omega$-hydroxylé linéaire ou ramifié» un acide carboxylique à chaine aliphatique linéaire ou ramifié portant une ou plusieurs fonctions hydroxyles dont une au moins est en position terminale, comme par exemple et sans l'intention de s'y limiter les acides 16-hydroxyhexadecanoïque, 10,16-dihydroxyhexadécanoïque, 16-hydroxy-10-oxo-hexadecanoïque, 10-hydroxyhexadecanedioïque, 18-hydroxyoctadec-9-enoïque, 18-hydroxy-9,10-epoxyoctadecanoïque, 9,10,18-trihydroxyoctadecanoïque.

Au sens de la présente invention, on entend par « dérivés » d'un acide gras $\omega$-hydroxylé linéaire ou ramifié, des composés pouvant être préparés à partir dudit acide gras $\omega$-hydroxylé linéaire ou ramifié, et étant de formule $(HO)C_nH_{2n-m-2p}(OH)_mCOOR$ où R est un groupement M ou $R_5$,

M représentant un contre-ion métallique, lié de façon non covalente à l'anion $(HO)C_nH_{2n-m-2p}(OH)_mCOO^-$, notamment choisi parmi le sodium, le potassium, le lithium,
ou un cation organique, contenant un atome d'azote, d'oxygène ou de carbone protonés, étant de préférence représenté par un ammonium quaternaire de formule $R_1R_2R_3R_4N^+$, avec $R_1$, $R_2$, $R_3$ et $R_4$ pouvant être indépendamment un atome d'hydrogène ou un composé à chaine aliphatique linéaire ou ramifié comportant de 1 à 18 atomes de carbone,

$R_5$ représentant une chaine aliphatique ou ramifiée comportant de 1 à 18 atomes de carbones, liée de manière covalente à l'anion $(HO)C_nH_{2n-m-2p}(OH)_mCOO^-$ formant ainsi une fonction ester.

On entend également par « dérivés » d'un acide gras ω-hydroxylé linéaire ou ramifié, des oligomères.

Au sens de la présente invention, on entend par « composé à chaine aliphatique linéaire ou ramifiée », un composé non-aromatique présentant une chaîne carbonée ouverte linéaire ou ramifiée, saturée ou insaturée.

Au sens de la présente invention, on entend par « *un atome d'azote, d'oxygène ou de carbone protonés* » le fait que ledit atome d'azote, d'oxygène ou de carbone a un excès de protons par rapport aux électrons, résultant en la présence d'une charge positive sur ledit atome.

En d'autres termes, il s'agit d'un cation organique dont la charge positive est portée par un atome d'azote, d'oxygène ou de carbone.

Les acides gras ω-hydroxylés de la présente demande peuvent être synthétisés par voie chimique mais également extraits à partir de végétaux. L'une des méthodes préférées sera d'obtenir les acides gras ω-hydroxylés par hydrolyse des composants macromoléculaires constituant la cutine des végétaux. Après isolation, par des méthodes de séparation physique ou par extraction liquide-liquide, la cutine sera hydrolysée chimiquement ou à l'aide d'enzymes spécifiques notamment des cutinases. La peau de tomate issue des drèches industrielles, contenant entre 60 et 70% de cutine, sera une matière première de choix, pour obtenir des acides gras poly-hydroxylés en quantité importante et de manière économiquement acceptable.

La présente demande souhaite proposer une solution efficace pour protéger les plantes contre les attaques de pathogène à l'aide d'une composition contenant des acides gras ω-hydroxylés. Afin d'augmenter la diffusion des molécules dans la plante l'une des solutions consiste à utiliser une composition concentrée en acides gras ω-hydroxylés pour favoriser les gradients de concentration. Une autre solution ou une solution complémentaire, consiste à modifier les acides gras ω-hydroxylés afin d'augmenter leur solubilité dans l'eau, de conférer des propriétés tensioactives et de réduire les interactions ioniques. La neutralisation desdits acide gras ω-hydroxylés avec une solution d'hydroxyde de métal alcalin, ou une solution contenant une amine primaire, pouvant donc facilement former un contre-ion ammonium, sont des solutions techniques apportées par la présente demande. L'estérification des acides gras ω-hydroxylés par des alcools courts, notamment le méthanol ou l'éthanol ou d'un nombre de carbone supérieur est une autre solution possible apportée par la présente demande en augmentant cette fois le caractère de solvant desdits acides gras.

Au sens de la présente invention, on entend par « défense des plantes », la capacité d'un produit à déclencher une réponse biologique de la plante traitée, à activer les voies de défenses, à promouvoir l'élicitation, à protéger la plante contre un stress biotique ou abiotique, ou à traiter la plante contre les effets induits par un stress biotique ou abiotique, indépendamment de manière localisée ou généralisée à la plante entière.

Au sens de la présente invention, on entend par « agents pathogènes », des agents capables d'engendrer une lésion ou de causer une maladie à une plante. Sont concernés les champignons, les oomycètes, les bactéries, les virus, les viroïdes, les phytoplasmes, les protozoaires, les nématodes, les plantes et insectes parasites, les insectes piqueurs-suceurs exophages comme les pucerons, cicadelles, psylles, punaises, cochenilles, tingidae, aleurodes, thrips, les insectes foreurs comme les lépidoptères, les coléoptères, les diptères, les insectes galligènes.

Les acides gras ω-hydroxylés contenus dans la composition de l'invention peuvent être extraits de végétaux, par des méthodes enzymatiques, ou par hydrolyse acide ou basique. En particulier les acides gras ω-hydroxylés contenus dans la composition de l'invention peuvent être extraits de la peau de tomate.

Les compositions de l'invention peuvent contenir des acides gras ω-hydroxylés provenant d'extraits d'un ou plusieurs végétaux différents, tels que le pommier (*Malus pumila*), le bigaradier (*Citrus aurantium*), les fèves (*Vicia faba*), le merisier (*Prunus avium*), la canneberge (*Vaccinium macrocarpon*), le fruit de la vigne (*Vitis vinifera*), la graine des pois (*Pisum sativum*), les fruits des groseillers à maquereau (*Ribes grossularia*), la papaye (*Malabar papaiarnarum*)*,* les feuilles d'agave (*Agave americana*), les graines de pamplemousse (*Citrus paradisi*)*,* le citron (*Citrus limon*), le citron vert (*Citrus aurantifolia*), les fruits du papayer (*Carica papaya*), l'oignon (*Allium cepa*), les airelles (*Vaccinium vitis idaea*), les feuilles de caféier (*Rubiaceae coffea*), les fruits de l'églantier (*Rosa canina*), les courges (*Cucurbita pepo*).

Les extraits obtenus à partir de ces végétaux, et notamment de la peau de tomate, ont une teneur en acides gras ω-hydroxylés allant de 20% à 100%, notamment supérieure à 20%, notamment supérieure à 30%, notamment supérieure à 40%, notamment supérieure à 50%, notamment supérieure à 60%, notamment supérieure à 70%, et de préférence de 80% à 100%, notamment supérieure à 80%, notamment supérieure à 90%.

La présente description concerne l'utilisation telle que décrite ci-dessus, d'une composition comprenant un acide gras ω-hydroxylé linéaire ou ramifié, de formule $(HO)C_nH_{2n-m-2p}(OH)_mCOOH$,

n, m et p étant tels que définis précédemment,

ou un mélange desdits acides gras ω-hydroxylés linéaires ou ramifiés,
pour la défense des plantes contre des agents pathogènes.

Les dérivés d'un acide gras ω-hydroxylé linéaire ou ramifié peuvent notamment être des esters, des oligomères ou des sels.

Les sels d'acides gras peuvent notamment être formés avec un contre-ion métallique, ou un cation organique.

La présente description concerne l'utilisation telle que décrite ci-dessus, d'une composition comprenant au moins un sel d'acide gras de formule $(HO)C_nH_{2n-m-2p}(OH)_mCOO^-M^+$,

n, m, p et $M^+$ étant tels que définis précédemment,
ou un mélange desdits sels d'acide gras,
pour la défense des plantes contre des agents pathogènes.

Au sens de la présente invention, on entend par « sel d'acide gras » un composé ionique formé l'association d'un ou plusieurs anions dérivés d'un acide gras et d'un cation et de préférence de l'association d'un anion dérivé d'un acide gras et d'un cation monovalent. Les sels d'acides gras peuvent être composés par l'association d'un ou plusieurs anions dérivés d'un acide gras et d'un cation métallique et de préférence de l'association d'un anion dérivé d'un acide gras et d'un cation métallique monovalent. Dans ces cas, les sels d'acides gras peuvent être obtenus pas une méthode directe à une température élevée entre 100 et 240°C, par fusion dans un oxyde métallique ou un hydroxyde métallique et en soutirant l'eau formée au fur et à mesure. Les sels d'acides gras peuvent aussi être formés directement en phase aqueuse par la neutralisation des acides gras par un hydroxyde de métal alcalin, de préférence l'hydroxyde de sodium, l'hydroxyde de potassium, l'hydroxyde de lithium, ou par neutralisation par des carbonates de métal alcalin comme le carbonate de sodium, le carbonate de potassium, le carbonate de lithium. Les sels d'acides gras peuvent aussi être formés en milieu non aqueux à l'aide d'une solution éthanolique d'acétate de métal alcalin, comme l'acétate de sodium, l'acétate de potassium, l'acétate de lithium, ou d'hydroxyde de métal alcalin comme l'hydroxyde de sodium, l'hydroxyde de potassium et l'hydroxyde de lithium, éventuellement chauffée à reflux et en ajoutant petit à petit l'acide gras. Après filtration, concentration, neutralisation et séchage, on obtient un savon solide ou pâteux en fonction du point de fusion du produit obtenu. De manière préférée, les sels d'acides gras seront obtenus par saponification directe des cutines végétales par une solution d'hydroxyde de métal alcalin, comme l'hydroxyde de sodium, de potassium ou de lithium dans l'eau ou un solvant polaire, de préférence dans un alcool, comme le méthanol, l'éthanol, le propanol, le glycérol, le sorbitol, les glycols tels que le propylène glycol, le dipropylène glycol méthyl éther, le propylène glycol butyle éther, l'ethylène glycole butyle éther, de préférence dans l'éthanol, ou un carbonate comme le carbonate de glycérol, le carbonate d'éthylène, le carbonate de propylène et aussi le DMSO, l'isophorone, la gamma-butyrolactone, la N-méthyl-2-pyrrolidone, l'acétate d'éthyle, l'acétate de butyle, la méthy-ethyl-cétone ou butanone, la méthyl-isoamyl-cétone, ou comme l'alcool furfurylique. La saponification peut être réalisée à froid, c'est-à-dire à une température ambiante généralement comprise entre 10 et 30°C ou en chauffant le milieu réactionnel entre 30°C et la température de reflux du solvant, plus généralement entre 30 et 80°C. Après filtration, l'excès de solvant est soutiré sous pression réduite, puis le précipité lavé à l'eau ou par une solution de sulfate de sodium, puis séché.

Le cation, contre-ion monovalent de l'acide gras, peut aussi être organique, représenté par une molécule aliphatique contenant au moins un atome d'azote, d'oxygène ou de carbone protoné, de préférence un atome d'azote protoné formant ainsi un ammonium quaternaire. Le cation organique sera de préférence formé à partir d'une amine aliphatique de basicité forte à faible, telle que les amines grasses d'origine végétale ou synthétique comportant 8 à 18 atomes de carbone, comme les amines de coco, les amines oléiques, les amines stéariques, et aussi les amino-alcool comme par exemple les éthanolamines comme la mono-éthanolamine (MEA), la di-éthanolamine (DEA), la triéthanolamine (TEA), la diméthyléthanolamine (DMEA), la N-méthyldiéthanolamine (MDEA), et aussi les propanolamines comme l'aminométhylpropanol, les propylamines comme la N-éthyl-2-butylamine, la 3-méthoxypropylamine (MOPA), la diméthylaminopropylamine (DMAPA), et aussi la 2-butyl-amine, et aussi les éthylèneamines, et aussi les amines d'origine naturelle comme la choline, la guanine, et les acides aminés comme la L-lysine, la L-arginine, la L-histidine, la L-ornithine.

Les inventeurs ont trouvé de façon surprenante que les sels d'acide gras, salifiés par un acide aminé protoné, montrent un niveau d'induction de la défense des plantes contre des agents pathogènes stable dans le temps. On entend par *« stable dans le temps »* le fait que le niveau d'induction ne diminue pas, ou substantiellement pas, pendant au moins 2 ou 3 jours par rapport à l'induction initiale, observée après une journée. Il a notamment été observé que le niveau d'induction après 3 jours est au moins 80%, de préférence 90% du niveau d'induction après une journée.

Au sens de la présente invention, on entend par « acide aminé protoné » un acide aminé, formé par un acide carboxylique possédant au moins un groupe fonctionnel amine, en $\alpha, \beta, \gamma, \delta$ du groupe carboxylique et de préférence en $\alpha$, comme par exemple l'alanine, l'arginine, l'asparagine, l'acide aspartique, la cystéine, l'acide glutamique, la glycine, l'histidine, l'isoleucine, la leucine, la lysine, la méthionine, le phénylalanine, la proline, la serine, la thréonine, le tryptophane, la tyrosine, la valine, l'ornithine , sous leurs formes L ou D, dans lequel au moins une fonction amine est protonée conférant ainsi une charge positive à la molécule. Les acides aminés basiques seront préférés car leur protonation est facilitée quel que soit le pH, et leurs points isoélectriques élevés, au moins supérieurs à 7.0. Seront donc préférés la L-Lysine, la L-arginine, la L-histidine, et la L-ornithine.

Selon un mode de réalisation particulier, la présente invention concerne l'utilisation telle que décrite ci-dessus, d'une composition comprenant au moins un sel d'acide gras de formule $(HO)C_nH_{2n-m-2p}(OH)_mCOO^-M^+$, dans laquelle $M^+$ représente la L-Lysine,

ou un mélange desdits sels d'acide gras,
pour la défense des plantes contre des agents pathogènes.

La L-Lysine sera préférée car elle est facilement disponible en masse, et une des particularités de la présente demande d'invention est que la demanderesse a remarqué que les sels de lysine tels que précédemment décrit favorisaient la pénétration à travers la cuticule des plantes. La Lysine est un acide aminé essentiel, constitutif des protéines, produit par les plantes et les micro-organismes mais pas par les animaux, ni par l'homme. Ainsi, elle est largement produite industriellement (850 000 tonnes en 2008) comme complément alimentaire pour les porcs et les volailles. La Lysine sera produite par fermentation des sucres de betterave ou de cannes ou d'amidon hydrolysé et plus rarement de ligno-cellulose, par *Corynebacterium glutamicum, Brevibacterium lactofèrnicum, Brevibactrium flavum,* par des mutants de *Escherichia coli, Bacillus subtilis ou c.glutamicum.* Commercialement la L-Lysine est sous la forme d'une base alcaline en solution contenant en général 50% de L-Lysine (ou lysine-base), sous la forme de monochlorohydrate de L-Lysine, ou L-Lysine HCL, ou Lysine HCL contenant en général 78% de L-lysine équivalent, cristallisé ou sous forme diluée, de sulfate de lysine contenant en général de 50 à 55% de L-lysine équivalent, cristallisé ou sous forme diluée, et plus rarement de phosphate de L-lysine, phosphonate de L-lysine, d'acétate de L-lysine.

Pour la préparation du sel de lysine tel que décrit précédemment on préférera utiliser la lysine base. Une méthode préférée par sa simplicité, consistera à ajouter l'acide gras à une solution contenant la L-Lysine base ou une autre forme telle que décrit précédemment, à un pH compris entre 7 et 14, de préférence entre 9 et 13, à la température ambiante, ou entre 30 et 80°C, jusqu'à complète dissolution de l'acide gras et en maintenant le pH supérieur à 7. Le ratio molaire acide gras : L-lysine sera compris de 0.01 à 50, de 0.1 à 9, de 0.4 à 2.3, de 0.5 à 1.5, de préférence de 0.6 à 1.0, de préférence encore de 0.65 à 0.95.

La présente description concerne l'utilisation telle que décrite ci-dessus, d'une composition comprenant au moins un ester d'acide gras de formule $(HO)C_nH_{2n-m-2p}(OH)_mCOOR_5$,

n, m et p étant tels que définis précédemment,
$R_5$ représentant une chaine aliphatique linéaire ou ramifiée comportant de 1 à 18 atomes de carbones,

ou un mélange desdits esters d'acide gras,
pour la défense des plantes contre des agents pathogènes.

Les esters tels que décrits précédemment seront préparés indifféremment par estérification directe des acides gras ou par transestérification des cutines de végétaux. L'estérification directe consiste en une condensation de la fonction acide carboxylique de l'acide gras avec la fonction hydroxyle d'un alcool, sans catalyse, ou de préférence en catalyse acide. La transestérification sera de préférence opérée en catalyse basique, à l'aide d'une base forte ou d'alcoolates comme le méthanolate de sodium ou l'éthanolate de sodium. Les alcools comporteront de 1 à 18 atomes de carbone et de préférence de 1 à 8, de préférence le méthanol, l'éthanol, le propanol, le butanol, le pentanol, l'hexanol et ses isomères dont le 2-éthyl-butanol, l'heptanol et ses isomères comme le 2-heptanol, l'octanol et ses isomères comme le 2-éthyl-hexanol, et aussi l'isopropanol, le 2 méthyl-propanol, le 2 méthyl-propane-2-ol, le butan-2-ol, les alcools amyliques, le 2-methyl-butanol, le 3-methyl-butanol, le 2,2 diméthylpropanol, le pentan-3-ol, le pentan-2-ol, le 3-méthylbutan-2-ol, le 2-méthylbutan-2-ol, les alcools de guerbet comme le 2-propyl-heptanol, le 2 butyl-octanol.

La présente description concerne l'utilisation telle que décrite ci-dessus, d'une composition comprenant au moins un oligomère formé par la condensation de 2 à 20, de préférence de 2 à 10, plus préférablement 2, 3, ou 4, acides $\omega$-hydroxylés de formule $(HO)C_nH_{2n-m-2p}(OH)_mCOOH$, liés par des fonctions ester, avec n, m et p tels que définis précédemment, ayant des valeurs identiques ou différentes,

l'oligomère étant notamment de formule $(HO)(C_nH_{2n-m-2p}(OH)_mCOOC_{n'}H_{2n'-m'-2p'}(OH)_{m'}COO)_qH$,
n et n' étant indépendamment des entiers de 7 à 21, de préférence de 13 à 19, plus préférablement de 15 à 17,
m et m' étant indépendamment des entiers supérieur ou égaux à 0, de préférence de 1 à 3, plus préférablement égaux à 1,
p et p' représentant les nombres d'insaturations contenues dans le dit oligomère et étant des entiers de 0 à 3, de préférence égaux à 0,

q étant un nombre de 1 à 10, de préférence de 1 à 5, plus préférablement de 1 à 2,ou un mélange desdits oligomères, pour la défense des plantes contre des agents pathogènes.

Au sens de la présente invention, on entend par « oligomère » une substance constituée par la condensation de 2 à 20, acides $\omega$-hydroxylé identiques ou différents. Les oligomères seront de préférence directement issus de l'hydrolyse enzymatique, acide ou alcaline des cutines végétales mais peuvent aussi être le résultat d'une estérification de deux ou plusieurs acides poly-hydroxylés comme précédemment définis.

Les oligomères de la présente invention ont des masses moléculaires de 300 à 3000 g/mol, de préférence de 500 à 1100 g/mol.

Les compositions utilisées selon l'invention peuvent contenir les acides gras de l'invention et leurs dérivés en mélange. Il peut notamment s'agir à titre d'exemple de mélange d'acide gras, de sel d'acide gras et d'ester d'acide gras.

La présente description concerne l'utilisation d'une composition comprenant un mélange d'acides gras ou de dérivés d'acides gras tel que décrit ci-dessus, pour la défense des plantes contre des agents pathogènes.

La présente description concerne l'utilisation d'une composition telle que définie ci-dessus, ladite composition comprenant en outre un acide gras $\omega$-hydroxylé linéaire ou ramifié, de formule $(HO)C_nH_{2n-m-2p}(OH)_mCOOH$,

n, m et p étant tels que définis ci-dessus,

ou un mélange desdits acides gras $\omega$-hydroxylés linéaires ou ramifiés.

Selon un mode de réalisation particulier, la présente invention concerne l'utilisation d'une composition comprenant un mélange composé

- d'un acide gras $\omega$-hydroxylé linéaire ou ramifié, de formule $(HO)C_nH_{2n-m-2p}(OH)_mCOOH$, n, m et p étant tels que définis précédemment,
- d'un sel d'acide gras de formule $(HO)C_nH_{2n-m-2p}(OH)_mCOO^-M^+$, n, m et p étant tels que définis précédemment, M étant tel que défini précédemment,
- d'un ester d'acide gras de formule $(HO)C_nH_{2n-m-2p}(OH)_mCOOR_5$,

n, m et p étant tels que définis précédemment, $R_5$ étant tel que défini précédemment,
pour la défense des plantes contre des agents pathogènes.

Selon un mode de réalisation particulier, la présente invention concerne l'utilisation d'une composition comprenant un mélange composé

- d'un oligomère d'acides $\omega$-hydroxylés, notamment de formule $(HO)(C_nH_{2n-m-2p}(OH)_mCOOC_{n'}H_{2n'm'-2p'}(OH)_{m'-}COO)_qH$,

n, n', m, m', p, p', q étant tels que définis précédemment,
et d'un ou plusieurs composants choisis parmi :

- un acide gras $\omega$-hydroxylé linéaire ou ramifié, de formule $(HO)C_nH_{2n-m-2p}(OH)_mCOOH$, n, m et p tels que définis précédemment,
- un sel d'acide gras de formule $(HO)C_nH_{2n-m-2p}(OH)_mCOO^-M^+$, n, m et p étant tels que définis précédemment, M étant tel que défini précédemment,
- un ester d'acide gras de formule $(HO)C_nH_{2n-m-2p}(OH)_mCOOR_5$,

n, m et p étant tels que définis précédemment, $R_5$ étant tel que défini précédemment,
pour la défense des plantes contre des agents pathogènes.

La présente description concerne l'utilisation d'une composition comprenant un mélange composé d'un oligomère d'acides $\omega$-hydroxylés tels que définis précédemment, notamment de formule $(HO)(C_nH_{2n-m-2p}(OH)_m-COOC_{n'}H_{2n'-m'-2p'}(OH)_{m'}COO)_qH$, n, n', m, m', p, p', q étant tels que définis précédemment,

et d'un un acide gras $\omega$-hydroxylé linéaire ou ramifié, de formule $(HO)C_nH_{2n-m-2p}(OH)_mCOOH$, n, m et p étant tels que définis précédemment,
pour la défense des plantes contre des agents pathogènes.

Selon un mode de réalisation particulier, la présente invention concerne l'utilisation d'une composition comprenant un mélange composé

d'un oligomère d'acides ω-hydroxylés tels que définis précédemment, notamment de formule $(HO)(C_nH_{2n-m-2p}(OH)_mCOOC_{n'}H_{2n'-m'-2p'}(OH)_{m'}COO)_qH$, n, n', m, m', p, p', q étant tels que définis précédemment,

et d'un sel d'acide gras de formule $(HO)C_nH_{2n-m-2p}(OH)_mCOO^-M^+$, n, m et p étant tels que définis précédemment, M étant tel que défini précédemment,

pour la défense des plantes contre des agents pathogènes.

La présente description concerne l'utilisation d'une composition comprenant un mélange composé

- d'un oligomère d'acide ω-hydroxylés tels que définis précédemment, notamment de formule $(HO)(C_nH_{2n-m-2p}(OH)_mCOOC_{n'}H_{2n'-m'-2p'}(OH)_{m'}COO)_qH$, n, n', m, m', p, p', q étant tels que définis précédemment,

et d'un ester d'acide gras de formule $(HO)C_nH_{2n-m-2p}(OH)_mCOOR_5$,
n, m et p étant tels que définis précédemment, $R_5$ étant tel que défini précédemment,
pour la défense des plantes contre des agents pathogènes.

Selon un mode de réalisation particulier, la présente invention concerne l'utilisation d'une composition comprenant un mélange composé

- d'un oligomère d'acide ω-hydroxylés tels que définis précédemment, notamment de formule $(HO)(C_nH_{2n-m-2p}(OH)_mCOOC_{n'}H_{2n'-m'-2p'}(OH)_{m'}COO)_qH$, n, n', m, m', p, p', q étant tels que définis précédemment,

et d'un ou plusieurs composants choisis parmi :

- un acide gras ω-hydroxylé linéaire ou ramifié, de formule $(HO)C_nH_{2n-m-2p}(OH)_mCOOH$, n, m et p étant tels que définis précédemment,
- un sel d'acide gras de formule $(HO)C_nH_{2n-m-2p}(OH)_mCOO^-M^+$, n, m et p étant tels que définis précédemment, $M^+$ étant tel que défini précédemment,

pour la défense des plantes contre des agents pathogènes.

La présente description concerne l'utilisation d'une composition comprenant un mélange composé

- d'un oligomère d'acides ω-hydroxylés tels que définis précédemment, notamment de formule $(HO)(C_nH_{2n-m-2p}(OH)_mCOOC_{n'}H_{2n'-m'-2p'}(OH)_{m'}COO)_qH$, n, n', m, m', p, p', q étant tels que définis précédemment,

et d'un ou plusieurs composants choisis parmi :

- un acide gras ω-hydroxylé linéaire ou ramifié, de formule $(HO)C_nH_{2n-m-2p}(OH)_mCOOH$, n, m et p étant tels que définis précédemment,
- un ester d'acide gras de formule $(HO)C_nH_{2n-m-2p}(OH)_mCOOR_5$,

n, m et p étant tels que définis précédemment, $R_5$ étant tel que défini précédemment,
pour la défense des plantes contre des agents pathogènes.

Selon un mode de réalisation particulier, la présente invention concerne l'utilisation d'une composition comprenant un mélange composé

- d'un oligomère d'acides ω-hydroxylés tels que définis précédemment, notamment de formule $(HO)(C_nH_{2n-m-2p}(OH)_mCOOC_{n'}H_{2n'-m'-2p'}(OH)_{m'}COO)_qH$, n, n', m, m', p, p', q étant tels que définis précédemment,

et d'un ou plusieurs composants choisis parmi :

- un sel d'acide gras de formule $(HO)C_nH_{2n-m-2p}(OH)_mCOO^-M^+$, n, m et p étant tels que définis précédemment, $M^+$ étant tel que défini précédemment,
- un ester d'acide gras de formule $(HO)C_nH_{2n-m-2p}(OH)_mCOOR_5$,

n, m et p étant tels que définis précédemment, $R_5$ étant tel que défini précédemment,
pour la défense des plantes contre des agents pathogènes.

Selon un mode de réalisation particulier, la présente invention concerne l'utilisation, telle que définie précédemment, dans laquelle la composition est utilisée en association avec au moins une autre composition pour le traitement des plantes, notamment en association avec un engrais, un biostimulant, un produit phytosanitaire, ou un produit de biocontrôle.

Les associations peuvent être réalisées directement dans une cuve avant le traitement des plantes ou de la parcelle ou formulées spécifiquement avec la matière active phytosanitaire ou de biocontrôle ou biostimulante, ou les éléments nutritifs constituant l'engrais. Dans le premier mode de réalisation de l'association, l'homme du métier parlera de « tank-mix » ou mélange extemporané, et dans le deuxième mode de réalisation de « ready-mix » ou mélange prêt à l'emploi ou mélange « in-can ». Dans le cas spécifique des mélanges avec des produits phytosanitaires, l'objectif sera de réduire la dose du ou des pesticides par rapport aux doses préconisées ou généralement utilisées par les agriculteurs pour réduire la dangerosité et l'impact environnemental des traitements.

Les pesticides associés à l'utilisation de la composition de l'invention seront ceux répertoriés dans l'ouvrage « The Pesticide Index, second edition » de Hamish Kidd, ou une préparation à base d'une matière active autorisées selon le règlement Européen N° 1107/2009.

Les fongicides sont des composés chimiques ou biologiques capables d'inhiber ou détruire une population de champignons ou oomycètes ciblée provoquant des désordres dans les cultures.

Les fongicides associés à l'utilisation de la composition de l'invention seront par exemple des fongicides de la famille des anilinopyrimidime, des phtalimides, des organochlorés, des phosphonates, des benzamides, des carbamates, des dithiocarbamates, des triazoles, des strobilurines, des acétamines, des quinolines, des cyanoimidazoles, des dérivés de l'acide cinnamique, des composés minéraux comme du soufre, du cuivre, du calcium, de la silice.

Les matières actives à action fongicide associées à la préparation selon l'invention seront par exemple le cyprodinil présent par exemple dans le produit Amulette® contre la tavelure ou le produit Javise Max® contre la pourriture grise, la pyriméthanil présent par exemple dans le produit Erune® contre l'alternariose, l'anthracnose, le botrytis squamosa, la pourriture du collet, la pourriture grise, les tavelures, le folpel présent par exemple dans le produit Baltimore® ou le produit Molidor® contre les mildious, les oïdiums, le black rot, l'excoriose, le mancozèbe présent par exemple dans le produit Cimopec® M WG advance ou Mancopec® ou Nacelle® contre les mildious, le chlorothalonil présent par exemple dans le produit Dojo® contre la septoriose du blé, la diméthomorphe présent par exemple dans le produit Folpec Dimeo® ou Spyrit® WG conte les mildious, le fosétyl d'aluminium présent par exemple dans le produit Folpec Duo® ou le produit Medeiros® WG ou Odalisk® ou Riuel® WG contre les mildious le black rot, l'excoriose, le Difénoconazole présent par exemple dans le produit Krésostar® contre la stemphyliose et les tavelures, l'azoxystrobine présent par exemple dans le produit Melucine® 25SC contre les oïdiums, la ramulariose, la rhynchosponiose, les rouilles, la tébuconazole présent par exemple dans le produit Tébutec® contre le black rot, les oïdiums, le rougeot parasitaire, la kresoxim-méthyl présent par exemple dans le produit Tokra®WG contre les oïdiums, le black rot, le cymoxanil présent par exemple dans le produit Vitipec® WG advance contre les mildious, le soufre comme dans le produit Sulpec® 80GD ou Azupec® 80GD ou Grain d'Or® contre les oïdiums, la tavelure, l'excoriose, l'oxychlorure de cuivre comme dans le produit Cuprital® contre les mildious, la bouillie bordelaise.

Les insecticides sont des composés chimiques ou biologiques capables d'inhiber ou tuer les insectes, les larves ou les œufs, nuisibles aux cultures. Les insecticides associés à la composition suivant l'invention seront de la famille des organochlorés, des organophosphorés, des carbamates, des pyréthrinoïdes, des néonicotinoïdes, des sulfones, des sulfonates, des formamidines, des dérivés du pyrèthre, l'azadirachtine et dérivés, la quassine, la ryanodine, l'aconitine.

Les matières actives à action insecticide associées à la préparation selon l'invention seront par exemple le lambda-cyhalothrine présent par exemple dans le produit Alicante® ou le produit Corboda® ou le produit Karakas® contre les pucerons des épis, les pucerons du feuillage, les cicadelles, les tordeuses, les grosses et petites altises, les chenilles, les charançons, les méligèthes, les pyrales, les sésamines, la deltaméthrine présente par exemple dans le produit Deltastar® contre les pucerons, la mouche mineuse, la mouche grise, les cicadelles, les tordeuses, le zabre des céréales, les cécidomyies, les noctuelles, les pyrales, les héliothis, l'abamectine présent par exemple dans le produit Diamectine® contre les acariens, les mouches, les phytoptes, les psylles et notamment la psylle du poirier, les thrips, le chloropyriphos-méthyl présent par exemple dans le produit Garvine® ou le produit Martello 225 contre les cicadelles, les cochenilles farineuses et floconneuses, les lécanines, les tordeuses, l'alpha-cyperméthrine présent par exemple dans le produit Clameur® contre les chenilles phytophages, les cicadelles, les coléoptères phytophages, les mouches, les pucerons, les thrips, le chloranthraniliprole présent par exemple dans le produit Altacor® contre les chenilles et les mouches, le diflubenzuron présent par exemple dans le produit Dimilin Flo® contre le carpocapse du châtaignier, des pommes et poires, la sésamie, les chenilles phytophages, les vers du framboisier, le benzoate d'émamectine présent par exemple dans le produit Affirm® contre les chenilles phytophages, les tordeuses de la grappe, le carpocapse, l'anarsia, les noctuelles, les pyrales, l'esfenvarérate présent par exemple dans le produit Sumi Alpha® contre les pucerons, les tordeuses, les altises et les pyrales de la vigne, l'étofenprox présent par exemple dans le produit Trebon® 30EC contre les coléoptères phytophages, les cicadelles et tordeuse de la vigne, la fénoxycarbe présente par exemple dans le produit Insegar® contre les tordeuses et carpocapses des pommiers, poiriers, la cochenille noire de l'olivier, les vers de la grappe et les cochenilles lécanines, l'indoxacarbe présent par exemple dans le produit Explicit® EC contre les cicadelles et plus particulièrement la cicadelle verte, les coléoptères phytophages, les chenilles phytophages, les chenilles foreuses des fruits, les tordeuses de la grappe, les pyrales du maïs, les noctuelles du chou et le la tomate, les méligèthes, la teigne des crucifère, la légionnaire de la betterave, le phosmet présent par exemple dans le produit Boravi® WG contre les altises de colza, le pirimicarbe présent par exemple dans le produit Karate K® contre les pucerons, les mouches, les chenilles phytophages, la pymétrozine présent par exemple dans le produit Plenum® 50WG contre les pucerons, les aleurodes, le pyriproxyfen présent par exemple dans le produit Admiral pro® contre les cochenilles, les aleurodes, le spinétorame présent par exemple dans le produit Delegate® contre les chenilles foreuses des fruits, les chenilles phytophages, les psylles, les thrips, le spinosad présent par exemple dans le produit Conserve® contre les chenilles phytophages, les thrips, le pyrale du buis, la spirotétramate présente par exemple dans le produit Movento® contre les pucerons, les aleurodes, les cochenilles, la tebufenozide présent par exemple dans le produit Confirm® contre les chenilles phytophages, les chenilles foreuses des fruits, les tordeuses de la grappe, la zeta-cypermethrin présent par exemple dans le produit Fury® 10EW contre les coléoptères phytophages, les cicadelles, les foreuses de la grappe, les mouches, les pucerons, les chenilles phytophages, les thrips, les pyrales du maïs.

Les produits de biocontrôle pouvant être utilisés en association avec les compositions de l'invention sont notamment des micro-organismes tels que ceux de la famille des *Bacillus thuringiensis,* de *Cydia pomonella granulosvirus,* de *thricoderma spp,* des dérivés de substances naturelles tels que des dérivés de phyto-hormones obtenus de manière naturelle ou synthétique comme la benzyladénine, l'acide gibberellique, l'acide indolbutyrique , des extraits de levure comme le Cerisanne®, des extraits de polysaccharides issus d'algues tels que les extraits de laminarine , des oligomères de pectine, des extraits de chitosans, des terpènes et des huiles essentielles comme l'eugénol, le géraniol, le thymol, les huiles de citrus, les huiles de curcuma, les huiles de thyms, les huiles d'orange douce, les huiles de menthe verte, des extrait d'ails, des extrait de fénugrec, des produits minéraux tels que l'hydrogeno-carbonate de potassium, le phosphate ferrique, le phosphonate de disodium,, les phosphonates de potassium, le silicate d'aluminium, le soufre, des dérivés du pyrèthre.

Cette utilisation peut se faire en préventif ou en curatif, elle peut donc avoir lieu avant ou pendant la contamination de la plante par un ou des agents pathogènes, ou avant l'apparition de symptômes caractéristiques générés par un stress biotique, ou avant ou pendant l'attaque de la plante par un ou plusieurs insectes phytophages ou parasitaires , ou encore après la contamination de la plante par un ou des agents pathogènes, après l'apparition des symptômes caractéristiques d'un stress biotique, ou après l'attaque de la plante par un ou plusieurs insectes phytophages ou parasitaires.

Selon un mode de réalisation particulier, la présente invention concerne l'utilisation, telle que définie précédemment, dans laquelle la composition est utilisée avant la contamination de la plante par un ou des agents pathogènes, ou avant l'apparition de symptômes caractéristiques générés par un stress biotique, ou avant l'attaque de la plante par un ou plusieurs insectes phytophages ou parasitaires. Cette utilisation correspond donc à une utilisation de manière préventive, en appliquant ladite composition de 1 heure à 45 jours, de préférence de 12 heures à 7 jours, avant la contamination de la plante par un ou des agents pathogènes, ou avant l'apparition de symptômes caractéristiques générés par un stress biotique, ou avant l'attaque de la plante par un ou plusieurs insectes phytophages ou parasitaires.

Selon un mode de réalisation particulier, la présente invention concerne l'utilisation telle que définie précédemment, dans laquelle la composition est utilisée pendant ou après la contamination de la plante par un ou des agents pathogènes, pendant ou après l'apparition des symptômes caractéristiques générés par un stress biotique, pendant ou après l'attaque de la plante par un ou plusieurs insectes phytophages ou parasitaires.

Cette utilisation correspond donc à une utilisation de manière curative, en appliquant ladite composition de 1 heure à 90 jours, de préférence de 6 heures à 30 jours, de préférence encore de 12 heures à 7 jours après la contamination de la plante par un ou des agents pathogènes, après l'apparition des symptômes caractéristiques générés par un stress biotique, après l'attaque de la plante par un ou plusieurs insectes phytophages ou parasitaires.

La composition selon l'invention pourra en outre être appliquée plusieurs fois par cycle végétatif et avant la récolte, notamment pour limiter les conséquences induites par un stress biotique ou abiotique ou chaque fois que le risque de contamination par un ou des agents pathogènes ou des insectes sera élevé. Cette évaluation du risque est connue de l'homme du métier avec l'utilisation d'outils prédictifs, la météorologie, l'observation visuelle macroscopique ou microscopique de la culture, le comptage biologique ou génétique des infections, le piégeage d'insectes ou de spores de champignons phytopathogènes, ou la connaissance générale de la culture et de la parcelle.

La composition selon l'invention pourra être appliquée de une à 30 fois, de une à 20 fois, de une à 15 fois, de une à dix fois, de une à 5 fois, de une à 2 fois sur la plante cultivée avant la récolte.

De nombreuses plantes peuvent faire l'objet de l'utilisation de la composition selon l'invention, notamment les céréales, les plantes de maraichage, les arbres fruitiers et les fruits, les plantes ornementales.

Selon un mode de réalisation particulier, la présente invention concerne l'utilisation, telle que définie précédemment, dans laquelle les plantes sont choisies parmi les *Poaceae* tels que le riz, le blé, le maïs ,l'orge, l'avoine, le seigle, le sorgho, le millet, la canne à sucre, mais aussi des plantes ornementales comme les graminées à gazon, les miscanthus ; les *Rosaceae* tels que l'abricotier, l'amandier, le cerisier, le cognassier, le fraisier, le framboisier, le pêcher, le poirier, le pommier, le prunier et aussi les plantes ornementales comme les rosiers, les potentilles ; les *Vitaceae* tels que les vignes et notamment *Vitis Vinifera* ; les *Brassicacae* tels que les colzas, les moutardes, les choux, les navets, les radis ; les *Amaranthaceae* tels que les betteraves, les épinards ; les *Cucurbitaceae* tels que les concombres, les citrouilles, les courges, les melons, les pastèques ;les *Solanaceae* tels que les pommes de terre, les tomates, les aubergines, les poivrons, les piments, les tabacs, les pétunias ; les *Rutaceae* tels que les citronniers, les orangers les pamplemoussiers ; les *Asteraceae* tels que les chicorées dont l'endive, les laitues, les artichauts, les tournesols, mais aussi des plantes ornementales comme les chrysanthèmes, les dahlias, les asters ; les *Fabaceae* tels que les pois, les haricots, le soja, les lentilles, les arachides, les luzernes mais aussi des plantes ornementales comme les lupins, les mimosas ; les *Juglandaceae* tel que le noyer, les *Betulaceae* tel que le noisetier, les *Anacardiaceae* tels que le pistachier, le manguier, l'anarcardier, les *Fagaceae* tel que le châtaignier, les *Moraceae* tels que le figuier, le mûrier blanc, les *Oleaceae* tel que l'olivier, les *Actinidiaceae* tel que l'arbre à kiwi, les *Lauraceae* tel que l'avocatier, les *Musaceae* tel que le bananier, les *Rubiaceae* tels que la garance, le caféier, les *Theaceae* tels que le camellia, le théier, les *Sterculiaceae* tel que le cacaoyer ; les *Liliaceae* tels que les tulipes, les jacinthes, les narcisses ; les *Apiacea* tels que les persils, les céleris, les fenouils, les panais.

Selon un mode de réalisation particulier, la présente invention concerne l'utilisation, telle que définie précédemment, dans laquelle les pathogènes sont des champignons tels que notamment *Pyricularia spp* tels que *Magnaporte grisea* responsable de la pyriculariose des céréales, *Puccinia spp* tels que *puccinia triticina* responsable de la rouille du blé, *puccinia graminis* responsable des rouilles des céréales, *Botrytis sp* tels que *Botrytis cinerea* responsable de la pourriture grise sur vigne, tournesol, tomate ou fraise, *Oidium neolycopersici* responsable de l'oïdium de la tomate, *Phytophthora sp* tel que *Phytophthora infestans* responsable du mildiou de la pomme de terre et de la tomate , *Phytophtora cactorum* responsable de la chancre du collet sur pommier, *Plasmopara viticola* responsable du mildiou de la vigne, *Erysiphe necator* responsable de l'oïdium de la vigne, *Fusarium spp* responsable de la fusariose, notamment *frivale, foxysporum, fsolani, fgerminearum, fgraminearum, Blumeria graminis* responsable du blanc des céréales, *Colletotrichum spp* notamment *Colletotrichum acutatum* responsable des anthracnoses sur fraisiers et oliviers, *Alternaria spp.* responsable de l'alternariose sur les feuilles de carottes et les pommes de terre, *Mycosphaerella spp.* notamment *M. graminicol (ou Zymoseptoria tritici)* responsable de la septoriose sur le blé et *Septoria lycopersici* responsable de le septoriose de la tomate, *Venturia sp* tel que *Venturia inaequalis* responsable de la tavelure du pommier, *Phomopsis spp.* notamment *Phomopsis viticola* responsable de l'excoriose du bois de la vigne, *Helminthosporium sp.* notamment *Helminthosporium avenae* responsable de la fonte des semis de l'avoine , *Monilia spp.* notamment *Monilia fructigena* responsable de la moniliose des arbres fruitiers notamment des prunes, *Cochliobolus sp. notamment Chochiobulus carbonum (ou Bipolaris zeicola)* responsable de l'helminthosporiose du maïs, *Sclerotinia sclerotiorum* responsable de la sclerotinia ou pourriture blanche sur colza, le tournesol, les haricots, la carotte, *Cercospora sp* tel que *cercospora beticola* responsable de la cercosporiose de la betterave, *Ramularia beticola* responsable de la ramulariose de la betterave, *Rhynchosporium spp* tel que *Rhynchosporium secalis* responsable de la maladie des taches brunes de l'orge, *Cladosporium sp* tel que *Cladosporium fulvum* responsable de la cladosporiose sur tomates, *Didymella sp* tel que *Didymella bryoniae* responsable de la chancre gommeux des cucurbitacées, *phoma sp* tels que *Phoma betae* responsable de la maladie du pied noir de la betterave, *Phoma batata* sur patate douce, *Phoma solani* responsable de nécroses racinaires (fonte de semis), *Aspergillus sp.* tel que *Aspergillus ochraceus* pouvant produire des toxines dans les grains de céréales, *Ascophyta sp* tel que *Ascophyta tritici* sur blé, *Stemphylium sp* tel que *S.solani, S. lycopersici* responsable de la stemphyliose sur tomates, *Stemphylium vesicarium (ou pleospora allii)* responsable de la stemphyliose du poirier, *Glomerella cingulata* responsable de l'anthracnose sur pommier et poirier, *Plasmopara viticola* responsable du mildiou de la vigne, *Bremia lactucae* pour le mildiou de la laitue, *Peronospora sp.* responsable des mildiou sur betterave, épinard, luzerne, chou, tabac, soja et pois, *Pythium sp.* responsable de la fonte des semis ou pourriture racinaire de la betterave, poivrons, courges, chrysanthèmes, gazon, *Diaporthe sp.* tel que *Diaporthe ampelina* provoquant des dépérissements des pieds de vigne, *diaporthe phaseolorum* responsable de la phomopsis du soja, *Elsinoe sp* tel qu'*Elsinoe ampelina* responsable de l'anthracnose de la vigne, *Verticilium sp.* tel que *Verticillium dahliae* responsable de la verticilliose sur tournesol, *Pyrenopezzia sp* tel que *Pyrenopezzia brassicae* responsable de la cylindrosporiose du colza, des bactéries tels que notamment *Erwinia sp* tels que *Erwinia amylovara* responsable du feu bactérien du poirier et du pommier, *pseudomonas sp* tel que *pseudomonas syringae* responsable de chancres sur les arbres fruitiers et de la moucheture bactérienne des tomates, *Xanthomonas sp* tel que *Xanthomonas arboricola* responsable des taches bactériennes sur pêcher, la maladie des tâches noir sur noyer, les virus tels que notamment les virus de la mosaïque du concombre, les virus de la mosaïque du chou-fleur, les virus A, X,S, M et Y de la pomme de terre, les virus mosaïque de la tomate, virus de la moucheture de la fraise, les insectes piqueurs-suceurs exophages comme les pucerons tels que le puceron cendré du pommier *(Dysaphis plantaginea),* puceron vert du pommier *(Aphis pomi),* puceron lanigère *(Eriosoma lanigerum),* puceron des galles rouges *(Dysaphis spp),* puceron vert des citrus *(Aphis spiraecola),* les cicadelles tels que la cicadelle de la pomme de terre *(Empoasca fabae),* cicadelle des grillures de la vigne *(Empoasca vitis),* les psylles tels que la psylle du pommier *(Cacopsylla mali),* du poirier *(Cacopsylla pyri),* de l'olivier *(Euphyllura olivina),* des agrumes *(Diaphorina citri),* du buis *(Psylla buxi)* , les punaises, les cochenilles, les tingidae, les aleurodes tels que l'aleurode du tabac *(Bemisia tabaci),*

l'aleurode floconneux des citrus *(Aleurothrixus floccosus),* l'aleurode noir de l'olivier *(Aleurolobus olivinus),* l'aleurode spriralant *(Aleurodicus dispersus),les* thrips tels que les thrips des céréales *(Limothrips cerealium ou dentiocornis),* les thrips du pêcher *(Thrips meridionalis),* les thrips du pois *(Frankliniella robusta),* les insectes foreurs comme les lépidoptères, les coléoptères, les diptères, les insectes galligènes.

Les compositions selon l'invention seront appliquées de préférence avant la récolte ou après la récolte, sur la plante entière, le feuillage, les fleurs, les fruits, les graines, au semis, au repiquage des plants, par pulvérisation au sol, par irrigation, par irrigation hydroponique, par adsorption sur substrat inerte ou organique, par pulvérisation à l'aide de pulvérisateurs à pression de liquide ou à jet projeté, pulvérisateurs centrifuges, pulvérisateurs pneumatiques, par pulvérisation par voie aérienne, par épandage, par trempage, par absorption, en enrobage ou pelliculage de semences, en enrobage ou pelliculage des engrais solides, par dilution dans les solutions d'engrais en ferti-irrigation ou culture hydroponique.

La composition selon l'invention sera administrée selon une concentration en acides gras $\omega$-hydroxylés permettant l'élicitation de la plante traitée, et de manière générale de 0,1 mg à 100 kg d'acide gras $\omega$-hydroxylé par hectare traité, de préférence de 10 mg à 10 kg par hectare, de préférence encore 100 mg à 1 kg par hectare.

Selon un mode de réalisation particulier, la présente invention concerne l'utilisation, telle que définie précédemment, dans laquelle la composition est administrée par pulvérisation sur la plante entière ou le feuillage, à une concentration de 0,1 mg à 100 kg d'acides gras $\omega$-hydroxylés par hectare traité, de préférence de 10 mg à 10 kg par hectare, de préférence encore 100mg à 1kg par hectare.

Outre son utilisation, l'invention porte également sur la composition en tant que telle comprenant au moins un acide gras ou un de ses dérivés.

La description est relative à une composition phytosanitaire comprenant au moins un acide gras $\omega$-hydroxylé linéaire ou ramifié ou un de ses dérivés, de formule $(HO)C_nH_{2n-m-2p}(OH)_mCOOR$,

n étant un entier de 7 à 21, de préférence de 13 à 19, plus préférablement de 15 à 17,

m étant un entier supérieur ou égal à 0, de préférence de 1 à 3, plus préférablement égal à 1,

p représentant le nombre d'insaturations contenues dans le dit acide gras et étant un entier de 0 à 3, de préférence égal à 0,

R étant un hydrogène ou un groupement M ou $R_5$,

M représentant un contre-ion métallique lié de façon non covalente à l'anion $(HO)C_nH_{2n-m-2p}(OH)_mCOO^-$, notamment choisi parmi le sodium, le potassium, le lithium,

ou un cation organique, contenant un atome d'azote, d'oxygène ou de carbone protonés, étant de préférence un ammonium quaternaire de formule $R_1R_2R_3R_4N^+$, avec $R_1$, $R_2$, $R_3$ et $R_4$ pouvant être indépendamment un atome d'hydrogène ou un composé à chaine aliphatique linéaire ou ramifiée comportant de 1 à 18 atomes de carbone ou un ester linéaire ou ramifié comportant de 4 à 18 atomes de carbones,

$R_5$ représentant une chaine aliphatique linéaire ou ramifié comportant de 1 à 18 atomes de carbones,

ou un mélange desdits acides gras $\omega$-hydroxylés linéaires ou ramifiés ou desdits dérivés.

La présente description concerne notamment une composition phytosanitaire comprenant au moins un dérivé d'acide gras $\omega$-hydroxylé linéaire ou ramifié, ledit dérivé ayant la formule $(HO)C_nH_{2n-m-2p}(OH)_mCOOR$,

n étant un entier de 7 à 21, de préférence de 13 à 19, plus préférablement de 15 à 17,

m étant un entier supérieur ou égal à 0, de préférence de 1 à 3, plus préférablement égal à 1, p représentant le nombre d'insaturations contenues dans le dit acide gras et étant un entier de 0 à 3, de préférence égal à 0,

R étant un groupement M ou $R_5$,

M représentant un contre-ion métallique lié de façon non covalente à l'anion $(HO)C_nH_{2n-m-2p}(OH)_mCOO^-$, notamment choisi parmi le sodium, le potassium, le lithium,

ou un cation organique, contenant un atome d'azote, d'oxygène ou de carbone protonés, étant de préférence un ammonium quaternaire de formule $R_1R_2R_3R_4N^+$, avec $R_1$, $R_2$, $R_3$ et $R_4$ pouvant être indépendamment un atome d'hydrogène ou un composé à chaine aliphatique linéaire ou ramifiée comportant de 1 à 18 atomes de carbone

ledit dérivé d'acide gras $\omega$-hydroxylé étant un sel d'acide gras,

$R_5$ étant une chaine aliphatique linéaire ou ramifiée comportant de 1 à 18 atomes de carbones,

ledit dérivé d'acide gras $\omega$-hydroxylé étant un ester d'acide gras,

ou ledit dérivé d'acide gras $\omega$-hydroxylé étant un oligomère formé par la condensation de 2 à 20, de préférence de 2 à 10, plus préférablement 2, 3 ou 4, acides $\omega$-hydroxylés de formule $(HO)C_nH_{2n-m-2p}(OH)_mCOOH$, liés par des fonctions ester,

ou un mélange desdits dérivés d'acides gras $\omega$-hydroxylés linéaires ou ramifiés.

Un autre objet de la présente invention concerne une composition phytosanitaire comprenant un mélange de sels d'acides gras ω-hydroxylés linéaires ou ramifiés ayant la formule $(HO)C_nH_{2n-m-2p}(OH)_mCOOM^+$,

n étant un entier de 15 à 17,

m étant un entier supérieur ou égal à 0, de préférence de 1 à 3, plus préférablement égal à 1, p représentant le nombre d'insaturations contenues dans ledit acide gras et étant un entier de 0 à 3, de préférence égal à 0,

dans laquelle $M^+$ représente un acide aminé protoné notamment choisi parmi la L-lysine, la L-arginine, la L-histidine, la L-ornithine protonées ou un mélange desdits sels d'acide gras.

Au sens de la présente invention, on entend par « composition phytosanitaire » une composition destinée à soigner ou prévenir les maladies des végétaux.

Les compositions phytosanitaires de l'invention comportent au moins un acide ou un dérivé d'acide ω-hydroxylé tels que définis précédemment, utilisés seul ou en association tels que définis précédemment, avec une ou plusieurs matières actives phytosanitaires et notamment une ou plusieurs matières actives fongicides ou insecticides. Une composition phytosanitaire particulière de l'invention consistera en une composition comportant au moins un acide ou un dérivé d'acide ω-hydroxylé et au moins une matière active fongicide. Une autre composition phytosanitaire particulière de l'invention consistera en une composition comportant au moins un acide ou un dérivé d'acide ω-hydroxylé et au moins une matière active insecticide. Une autre composition phytosanitaire particulière de l'invention consistera en une composition comportant au moins un acide ou un dérivé d'acide ω-hydroxylé et au moins un produit de biocontrôle.

Selon un mode de réalisation particulier, la présente invention concerne la composition phytosanitaire, telle que définie ci-dessus, comprenant au moins un acide gras ω-hydroxylé linéaire ou ramifié, de formule $(HO)C_nH_{2n-m-2p}(OH)_mCOOH$,

n, m et p étant tels que définis précédemment,

ou un mélange desdits acides gras ω-hydroxylés linéaires ou ramifiés.

Les dérivés d'un acide gras ω-hydroxylé linéaire ou ramifié contenus dans la composition de l'invention peuvent notamment être des esters, des oligomères ou des sels.

Les sels d'acides gras peuvent notamment être formés avec un contre-ion métallique, ou un cation organique.

La présente description concerne la composition phytosanitaire, telle que définie ci-dessus, comprenant au moins un sel d'acide gras de formule $(HO)C_nH_{2n-m-2p}(OH)_mCOO^-M^+$,

n, m, p et $M^+$ étant tels que définis précédemment,

ou un mélange desdits sels d'acide gras.

Selon un mode de réalisation particulier, la présente invention concerne la composition phytosanitaire, telle que définie ci-dessus, comprenant au moins un sel d'acide gras de formule $(HO)C_nH_{2n-m-2p}(OH)_mCOO^-M^+$,

dans laquelle M représente la L-lysine,

ou un mélange desdits sels d'acide gras.

Selon un mode de réalisation particulier, la présente invention concerne la composition phytosanitaire, telle que définie ci-dessus, comprenant au moins un ester d'acide gras de formule $(HO)C_nH_{2n-m-2p}(OH)_mCOOR_5$,

n, m et p étant tels que définis précédemment,

$R_5$ représentant une chaine aliphatique linéaire ou ramifiée comportant de 1 à 18 atomes de carbones, ou un mélange desdits esters d'acide gras.

Selon un mode de réalisation particulier, la présente invention concerne la composition phytosanitaire, telle que définie ci-dessus, comprenant au moins un oligomère formé par la condensation de 2 à 20, de préférence de 2 à 10, plus préférablement 2, 3, ou 4, acides ω-hydroxylés de formule $(HO)C_nH_{2n-m-2p}(OH)_mCOOH$, liés par des fonctions ester, avec n, m et p tels que définis précédemment, ayant des valeurs identiques ou différentes,

l'oligomère étant notamment de formule $(HO)(C_nH_{2n-m-2p}(OH)_mCOOC_{n'}H_{2n'-m'-2p'}(OH)_{m'}COO)_qH$,

n et n' étant indépendamment des entiers de 7 à 21, de préférence de 13 à 19, plus préférablement de 15 à 17,

m et m' étant indépendamment des entiers supérieur ou égaux à 0, de préférence de 1 à 3, plus préférablement égaux à 1,

p et p' représentant les nombres d'insaturations contenues dans le dit oligomère et étant des entiers de 0 à 3, de préférence égaux à 0,
q étant un nombre de 1 à 10, de préférence de 1 à 5, plus préférablement de 1 à 2,
ou un mélange desdits oligomères.

Les compositions de l'invention peuvent contenir les acides gras de l'invention et leurs dérivés en mélange. Il peut notamment s'agir à titre d'exemple de mélange d'acide gras, de sel d'acide gras et d'ester d'acide gras, ou un mélange d'acide gras, d'oligomère d'acide gras, de sel d'acide gras et d'ester d'acide gras.

Selon un mode de réalisation particulier, la présente invention concerne une composition phytosanitaire, comprenant au moins un mélange d'acides gras ou de dérivés d'acides gras tels que décrits précédemment.

Selon un mode de réalisation particulier, la présente invention concerne une composition phytosanitaire, comprenant un mélange composé

- d'un acide gras $\omega$-hydroxylé linéaire ou ramifié, de formule $(HO)C_nH_{2n-m-2p}(OH)_mCOOH$, n, m et p étant tels que définis précédemment,
- d'un sel d'acide gras de formule $(HO)C_nH_{2n-m-2p}(OH)_mCOO^-M^+$, n, m et p étant tels que définis précédemment, M étant tel que défini précédemment,
- d'un ester d'acide gras de formule $(HO)C_nH_{2n-m-2p}(OH)_mCOOR_5$,

n, m et p étant tels que définis précédemment, $R_5$ étant tel que défini précédemment.

Selon un mode de réalisation particulier, la présente invention concerne une composition phytosanitaire, comprenant un mélange composé

- d'un oligomère d'acides $\omega$-hydroxylés tel que définit précédemment, notamment de formule $(HO)(C_nH_{2n-m-2p}(OH)_mCOOC_{n'}H_{2n'-m'-2p'}(OH)_{m'}COO)_qH$,

n, n', m, m', p, p', q étant tels que définis précédemment,
et d'un ou plusieurs composants choisis parmi :

- un acide gras $\omega$-hydroxylé linéaire ou ramifié, de formule $(HO)C_nH_{2n-m-2p}(OH)_mCOOH$, n, m et p étant tels que définis précédemment,
- un sel d'acide gras de formule $(HO)C_nH_{2n-m-2p}(OH)_mCOO^-M^+$, n, m et p étant tels que définis précédemment, M étant tels que défini précédemment,
- un ester d'acide gras de formule $(HO)C_nH_{2n-m-2p}(OH)_mCOOR_5$,

n, m et p étant tels que définis précédemment, $R_5$ étant tel que défini précédemment.

Selon un mode de réalisation particulier, la présente invention concerne la composition phytosanitaire, telle que définie ci-dessus, dans laquelle la proportion massique d'oligomères d'acides $\omega$-hydroxylés tels que définis précédemment, est inférieure à 30%, de préférence inférieure à 10%, plus préférablement inférieure à 5% de la masse totale de la composition.

La composition phytosanitaire de l'invention peut être formulée avec ou sans autres matières actives phytosanitaires et contenir en outre différents excipients, notamment des tensioactifs aux propriétés mouillante, dispersante, émulsionnante, pénétrante, détergente, notamment des tensioactifs non ioniques tels que des alkyl-polyglycosides dont la fonction alkyle est issue d'alcool en C8/C10, en C10/C12, en C12/C14, en C16/C18, des polysorbates comme le polysorbate 20, le polysorbate 60, le polysorbate 80, des alcools gras éthoxylés linéaires ou ramifiés comportant de 2 à 40 moles d'oxydes d'éthylène tels que le décanol à 4 moles d'oxyde d'éthylène, l'alcool C12/C14 à 7 moles d'oxyde d'éthylène, l'alcool C16/C18 à 11 moles d'oxyde d'éthylène, le 2-propylheptanol à 8 moles d'oxyde d'éthylène, des acides gras éthoxylés comme l'acide gras de coco à 10 moles d'oxyde d'éthylène, des huiles naturelles polyéthoxylés comme l'huile de ricin à 40 moles d'oxyde d'éthylène, l'huile de coco à 17 moles d'oxydes d'éthylène, des esters d'acides gras éthoxylés comme les esters méthylique d'huile de colza à 7 moles d'oxydes d'éthylène, des ester de mono ou polyglycérol comme le polyglycérol de polyricinoleate, des copolymères d'oxydes d'éthylène et de propylène, des amines grasses éthoxylés comme l'amine de coco à 15 moles d'oxyde d'éthylène, des glucamides comme la N-methyl-C8/C10-alkyl glucamide, des tensioactifs siliconés comme les polymères blocs à motifs trisiloxanes, des tensioactifs anioniques tels que des carboxylates ou savons, des alkylsulfates comme le dodecyl sulfate de sodium (SDS), les alkylsulfates éthoxylés tels que le lauryl ether sulfate de sodium comportant 4 motifs éthoxylés (LES), des aryl ou alkyl-sulfonates comme le LABS, le 2-methyl sulfolaurate de sodium, des alkylsulfosuccinate comme le dioctyl-sulfosuccinate de sodium, des esters alkyl phosphates, des tensioactifs anioniques dérivés d'APG tels que le lauryl-glucoside d'hydroxypropyl-sulfonate de sodium, le coco-glucoside citrate de di-sodium, le coco-glucoside tartrate de sodium, des tensioactifs anioniques dérivés d'acides aminés comme les acyl-glycinates, des tensioactifs cationiques tels que le chlorure de dodecyl-trimethyl-ammonium, des esters quaternaires comme le diesterquat du chlorure de 2,3 dihydroxypropyylammonium, le chlorure dipalmitoylethyldimonium, des tensioactifs amphotères ou zwitterioniques tels que des oxydes d'amines grasses comme l'oxyde de cocamidopropylamine, des bétaïnes comme la cocamidopropyl bétaïne (CAPB), des lécithines, et aussi des hydrotropes non ioniques anioniques, cationiques, amphotères tels que des polyglycosides d'alkyle linéaires ou ramifiés en C4, en C5, en C6, en C7, en C8, en C10, et notamment les xylosides d'alcools amyliques, les glucosides de butyle, les glucosides de 2-éthyl-héxyle, des alkyl ou aryl-sulfonates comme le sodium xylène sulfonate de sodium (SXS), le cumène sulfonate de sodium, des alkylsulfates comme le 2-éthyl-hexyle sulfate de sodium, des carboxylates comme l'octanoate de sodium, les dérivés de beta-alanine comme le N-(2-carboxyethyl)-N-(2-ethylhexyl)-$\beta$-alaniate de sodium, et aussi des polymères pour leurs propriétés dispersantes, stabilisantes, filmogène tels que des polymères acryliques, des polymères polyvinyliques, des polyvinylpyrrolidones, des polyacrylates, et aussi des gommes et polymères d'origines naturelles pour leurs propriétés gélifiantes, stabilisantes, pour ajuster la viscosité des préparations tels que des gommes de xanthane, des gomme de carraghénane, des carboxy-éthyl-celluloses, des carboxy-méthyl-celluloses, des fibres de celluloses micronisées, des gommes d'acacia, mais aussi des cires naturelles ou synthétiques pour épaissir et stabiliser les préparations tel que la cire d'abeille, des épaississants ou gélifiants tels que le chlorure de sodium, des complexants ou chélatants tels que l'EDTA, GLDA, NTA, DTPA, PDTA, EDDS, MGDA HEDTA, le glucoheptonate de sodium, le mucate de sodium ou d'ammonium, et aussi des solvants tels que l'eau, l'éthanol, l'isopropanol, des polyéthylènes glycols, des esters méthyliques d'huiles végétales comme l'ester méthylique d'huile de colza, des huiles paraffines, des esters di-basiques comme les esters méthylique de succinique, adipique, glutarique, des colorants, et aussi des pigments naturels ou de synthèse, et aussi des charges comme les oxydes de titane, et aussi des correcteurs de pH acides comme l'acide citrique, l'acide glycolique, ou basiques comme l'hydroxyde de sodium, l'hydroxyde de potassium, l'hydrogénocarbonate de sodium, et aussi des humectants comme le glycérol, le xylitol, le sulfate d'ammonium, et aussi des agents anti-mousses comme des polymères polysiloxanes, et aussi des anti-gels comme des éthers de glycols, et aussi des anti-corrosions, et aussi des conservateurs comme le 2-bromo-2-nitro-1,3-propanediol ou Bronopol®, les isothiazolinones comme la methylisothiazolinone (MIT), la chlorométhylisothiazolinone (CMI), la benzisothiazolinone (BIT), l'acide lactique, le gluconate de sodium, le sorbate de potassium.

Selon un mode de réalisation particulier, la présente invention concerne la composition phytosanitaire, telle que définie ci-dessus, comportant au titre de solvant de l'eau.

Selon un mode de réalisation particulier, la présente invention concerne la composition phytosanitaire, telle que définie ci-dessus, dans laquelle la proportion massique d'eau représente de 0.1 à 99.9%, notamment de 0.1 à 1 %, de 1 à 5 %, de 5 à 10%, de 10 à 20 %, de 20 à 30 %, de 30 à 40 %, de 40 à 50 %, de 50 à 60 %, de 60 à 70 %, de 70 à 80 %, de 80 à 90 %, de 90 à 99.9 % de la masse totale de la composition.

Outre les compositions comprenant au moins un acide gras ou un de ses dérivés, et leur utilisation, la description porte également sur les acide gras $\omega$-hydroxylés linéaires ou ramifiés ou un de leurs dérivés.

La description est relative à un acide gras $\omega$-hydroxylé linéaire ou ramifié, de formule $(HO)C_nH_{2n-m-2p}(OH)_m$-COOH,

n, m et p étant tels que définis précédemment.

La description est relative à un dérivé d'acide gras $\omega$-hydroxylé linéaire ou ramifié, de formule $(HO)C_nH_{2n-m-2p}(OH)_m$COOR,

n, m, p et R étant tels que définis précédemment.

La description est relative à un sel d'acide gras de formule $(HO)C_nH_{2n-2p}(OH)_m$COO$^-$M$^+$, n, m, p et M étant tels que définis précédemment.

Un autre objet de l'invention est un sel d'acide gras de formule $(HO)C_nH_{2n-2p}(OH)_m$COO$^-$M$^+$,

n, m et p étant tels que définis précédemment
et dans laquelle M$^+$ représente un acide aminé protoné notamment choisi parmi la L-lysine, la L-arginine, la L-histidine, la L-ornithine protonées.

Un autre objet de l'invention est un sel d'acide gras de formule $(HO)C_nH_{2n-2p}(OH)_m$COO$^-$M$^+$,

n, m et p étant tels que définis précédemment
et dans laquelle M$^+$ représente la L-lysine.

La description est relative à un ester d'acide gras de formule $(HO)C_nH_{2n-m-2p}(OH)_m$COOR$_5$,

n, m et p étant tels que définis précédemment,
R$_5$ représentant une chaine aliphatique linéaire ou ramifiée comportant de 1 à 18 atomes de carbones.

La description est relative à un oligomère formé par la condensation de 2 à 20, de préférence de 2 à 10, plus préférablement 2, 3 ou 4, acides ω-hydroxylés de formule $(HO)C_nH_{2n-m-2p}(OH)_mCOOH$, liés par des fonctions ester, avec n, m et p tels que définis précédemment, ayant des valeurs identiques ou différentes, notamment de formule $H(C_nH_{2n-m-2p}(OH)_nCOOC_{n'}H_{2n'-m'-2p'}(OH)_{m'}COO)_qH$, n, n', m, m', p, p', q étant tels que définis précédemment.

Un autre objet de la présente invention est une composition telle que définie ci-dessus, pour son utilisation phytosanitaire, notamment pour la défense des plantes contre des agents pathogènes.

**Exemple 1 : Préparation d'un mélange d'acides gras hydroxylés**

200 g de peau de tomate préalablement décirée et déshydratée sont mises en suspension dans 1L d'une solution d'hydroxyde de potassium à 5% préparée dans un solvant polaire, comme le méthanol, l'éthanol, le propanol, le glycérol, le sorbitol, les glycols tels que le propylène glycol, le dipropylène glycol méthyl éther, le propylène glycol butyle éther, l'ethylène glycole butyle éther, et aussi les carbonates comme le carbonate de glycérol, le carbonate d'éthylène, le carbonate de propylène et aussi le DMSO, l'isophorone, la gamma-butyrolactone, la N-méthyl-2-pyrrolidone, l'acétate d'éthyle, l'acétate de butyle, la méthy-ethyl-cétone ou butanone, la méthyl-isoamyl-cétone, ou comme l'alcool furfurylique. Le mélange est chauffé à 50 °C pendant 16h. La suspension est ensuite filtrée sous vide par passage à travers un fritté de taille A0 (160-250 μm) puis le filtrat est dilué par de l'eau et acidifié jusqu'à pH 3-4 à l'aide d'une solution d'acide chloridrique à 37%. La suspension ainsi formée est centrifugée à 8000 t/min pendant 15 minutes à 20°C puis le culot de centrifugation est récupéré, lavé à l'eau puis séché sous vide. 150g d'acide gras sont ainsi obtenu. Une analyse du produit par GC MS/FID montre une teneur en acide gras ω-hydroxylés de plus de 90%. Le tableau ci-dessous donne la composition centésimale de l'extrait hydrolysé ainsi obtenu.

Tableau 1 : Composition des acides gras de l'exemple 1

| | |
|---|---|
| Acide p-coumarique | 0.9% |
| Acide hexadécanoïque | 2.04% |
| Acide linoléique | 0.46% |
| Acide oléique | 0.28% |
| Acide stéarique | 0.05% |
| Acide 16-hydroxy-hexadécanoïque | **3.6%** |
| Acide 1,16-hexadecanedioïque | 0.61% |
| Acide dihydroxy-hexadecanoïque | **89.66%** |
| Acide hydroxy-hexadecan-1,16-dioïque | 2.12% |
| Acide dihydroxy-octanoïque | **0.28%** |

**Exemple 2 : Préparation d'un mélange d'esters éthyliques d'acides gras hydroxylés**

200 g de peau de tomate préalablement décirée et déshydratée sont mises en suspension dans 1L d'une solution d'acide sulfurique ($H_2SO_4$) préparée dans de l'éthanol anhydre. Le mélange est chauffé à 50 °C sous agitation modérée et à l'abri de l'air, pendant 48H puis la suspension est filtrée à l'aide d'un frittée A0. (160-250 μm). L'excès d'éthanol est évaporé sous pression réduite (70-90 bar) à 50°C. Le concentré ainsi obtenu est ensuite mélangé à 2 volumes d'eau osmosée, laissé sous agitation pendant 15 minutes puis centrifugé à 8000 t/min à 4°C pendant 15 minutes. Les esters d'acides gras représentant le culot de centrifugation sont ensuite rincés à l'eau osmosée puis séchés.

Une analyse du produit par GC MS/FID donne le profil en acides gras des esters obtenus, et montre une teneur en ester d'acides gras ω-hydroxylés de plus 90%. Le tableau ci-dessous donne la composition centésimale en acides gras de l'ester ainsi obtenu.

Tableau 2 : Composition en acides gras des esters de l'exemple 2

| | |
|---|---|
| Acide p-coumarique | 0.73% |
| Acide hexadécanoïque | 1.42% |
| Acide linoléique | 0.81% |
| Acide oléique | 0.42% |

(suite)

| Acide stéarique | 0.09% |
|---|---|
| Acide 16-hydroxy-hexadécanoïque | **5.45%** |
| Acide 1-16 hexadecanedioïque | 0.94% |
| Acide dihydroxy-hexadecanoïque | **87.82%** |
| Acide hydroxy-hexadecan-1,16-dioïque | 1.96% |
| Acide dihydroxy-octanoïque | **0.35%** |

**Exemple 3 : Préparation d'une formulation à 20 g/L de sel de sodium d'acide gras ω-hydroxylé.**

600 mg des acides gras de l'exemple 1 sont dilué dans 30 ml d'une solution de soude (NaOH) à 0.1M sous agitation jusqu'à complète dissolution. La solution ainsi obtenue est ensuite acidifiée jusqu'à pH 7.5 à l'aide d'une solution d'acide chlorhydrique à 37%.

Remise dans l'eau cette formulation donne une solution limpide diluée. La formule à 20 g/l est donc une solution concentrée (SL) selon le code GIFAP (1984).

**Exemple 4 : Préparation d'une formulation à 312.5 g/l d'ester éthylique d'acide gras ω-hydroxylés** 1.5g d'esters d'acides gras de l'exemple 2 sont mélangé dans 3.5g de polysorbate 20 (Tween®20) à la température du laboratoire. La solution ainsi formée contient donc 30% massique d'ester d'acide gras, ou 312.5 g/l. Remise dans l'eau cette formule forme spontanément une émulsion, formée pas la dispersion de l'ester dans l'eau. La formule à 312.5 g/l est donc un concentré émulsionnable (EC) selon le code GIFAP (1984).

**Exemple 5 : Préparation d'une formulation à base de sels de lysine**

52.5 g d'acide gras de l'exemple 1, sont mélangés à 297.5 g d'une solution contenant 38.5 g de L-Lysine, le reste étant de l'eau et des co-formulants. Le ratio molaire acide gras : L-lysine est alors égal à 0.697. Le pH de la solution est égal à 8.7.

La solution ainsi obtenue forme une solution limpide dans l'eau une fois diluée. Cette formulation à 150 g/l en acides gras extraits de cutine de tomate est donc une solution concentrée (SL) selon le code GIFAP (1984).

**Exemple comparatif 1 : Préparation d'une formulation à 150 g/l d'acide ricinoléïque.**

52.5g d'acide gras d'huile de ricin (Radiacid® 0197 de la société Oleon) sont mélangés à 297.5 g d'une solution contenant 38.5 g de L-Lysine, le reste étant de l'eau et des co-formulants. Le pH de la solution est alors égal à 8.9. La solution ainsi obtenue forme une solution limpide dans l'eau une fois diluée. Cette formulation à 150 g/l en acides gras d'huile de ricin est donc une solution concentrée (SL) selon le code GIFAP (1984).

**Exemple 6 : Induction des défenses de plants de pommier à l'aide de la préparation de l'exemple 3 via la plateforme qPFD®**

L'outil qPFD® (Puce à Faible Densité Quantitative, WO2011/161388) est un outil de diagnostic moléculaire qui permet d'évaluer un ensemble de 28 gènes cibles dont l'expression renseigne sur l'état de stimulation des défenses naturelles des plantes. Les gènes marqueurs parties de l'essai sont renseignés dans le tableau 3.

Tableau 3 : 28 gènes marqueurs de l'outil qPFD [®]

| Classes et sous-classes de défense | | Gènes de défense |
|---|---|---|
| | | Codes gènes |
| Barrières chimiques et/ou physiques | Protéines PR | PR-1 |
| | | PR-2 |
| | | PR-4 |
| | | PR-5 |
| | | PR-8 |
| | | PR-10 |
| | | PR-14 |
| | Voie des phénylpropanoïdes | PAL |
| | | CHS |
| | | DFR |
| | | BIS2 |
| | | PPO |
| | Voie des isoprénoïdes | HMGR |
| | | FPPS |
| | | Far |
| | Voie des cystéines | CSL |
| | Stress oxydant | APOX |
| | | GST |
| | | POX |
| | Modifications pariétales | CalS |
| | | Pect |
| | | CAD |
| Signalisation hormonale | Voie de l'acide salicylique (SA) | EDS1 |
| | | WRKY |
| | Voie de l'acide jasmonique (JA) | LOX2 |
| | | JAR |
| | Voie de l'éthylène (ET) | ACCO |
| | | EIN3 |

Les plants de pommier de la variété Golden Delicious ont été cultivés pendant 6 semaines sous serre en conditions semi-contrôlées (20-25 °C, photopériode naturelle) puis sélectionnées au stade de 4-6 feuilles. Les expériences sont effectuées en conditions semi-contrôlées (20-25 °C, photopériode naturelle 16h) sur des blocs de 15 plants par produit. Chaque plant est pulvérisé avec le produit à J0 à l'aide d'un pulvérisateur relié à l'air comprimé et jusqu'à ruissellement (50 ml par bloc de 15 plants). Du peroxyde d'hydrogène est pulvérisé à J1 pour simuler une attaque de bio agresseurs. Dix disques foliaires de diamètre 6 mm sont prélevés en poolant 5 jeunes feuilles développées de 5 plants différents à J0, avant traitement, puis à J2 et J3, après traitement. Les échantillons sont placés dans de l'azote liquide et conservés à -80 °C.

Les ARNs sont extraits (kit Nucleospin RNA Plant, Macherey-Nagel) et les échantillons sont analysés par spectrophotométrie (Nanodrop ND-100) pour déterminer leur qualité. Les échantillons sont rétro-transcrits en ADNc et le niveau d'expression sur les 28 gènes est suivi par PCR quantitative (agent intercalant SYBR Green) à l'aide de l'outil qPFD[®]. Les niveaux d'expressions sont calculés par la méthode $2^{-\Delta\Delta Ct}$ (relatives au prélèvement t0 et normalisées par la moyenne géométrique des expressions de 3 gènes de référence, TuA, Actin et GAPDH). Les expressions relatives sont transformées en Log2 pour donner le même poids aux inductions et aux répressions des gènes. Deux répétitions de l'ensemble de l'expérience ont été réalisées, de la production des semis à l'analyse en PCR quantitative. La préparation de l'exemple 3, constituée d'une solution à 20 g/l de sels de sodium d'acides gras issus de cutine de tomate, est diluée dans l'eau afin de fournir des concentrations de 10, 100 et 1000 mg/l d'équivalent acide gras totaux.

Les résultats sont comparés à un témoin négatif, représenté par des plantes conduites dans les mêmes conditions et traitées à l'eau uniquement. Les résultats sont alors exprimés en relatif par rapport à ce témoin négatif.

La moyenne des inductions des 28 gènes est reprise dans le tableau 4 pour les jours 2 et 3.

Tableau 4 : Cumul des inductions des 28 gènes exprimé en $2^{-\Delta\Delta Ct}$ (eau =0)

|  | J2 | J3 |
| --- | --- | --- |
| MODALITES | MOY. | MOY. |
| ACIDE GRAS 1000 PPM | 40,8 | 21,1 |
| ACIDE GRAS 100 PPM | 37,8 | 14,2 |
| ACIDE GRAS 10 PPM | 23,5 | 12,3 |

L'induction des 28 gènes de défenses est donc forte, 2 et 3 jours après le traitement quelle que soit la concentration en acides gras. Pour les deux durées, 2 et 3 jours après le traitement, cette induction sera d'autant plus importante que la quantité en acides gras extraits des cutines de tomates sera importante. Cela permet de justifier la nécessité d'ajouter de manière exogène des monomères de cutines sous la forme acides gras solubles pour surexprimer les gènes de défenses de la plante.

3 jours après le traitement, quelque soit la concentration en acide gras, la moyenne d'induction des gènes de défenses est 47.2% du niveau de celle à 2 jours.

Exemple 7 : Induction des défenses de plants de pommier à l'aide de la préparation de l'exemple 4 via la plateforme qPFD®

Le mode opératoire de l'exemple 6 est reproduit afin de déterminer les effets d'induction des gênes de défenses de la préparation de l'exemple 4 à base d'esters éthyliques d'acides gras issus de cutine de tomates.

La somme des inductions pour les 28 gênes de défense est reprise dans le tableau 5 pour les jours 2 et 3.

Tableau 5 : Cumul des inductions des 28 gènes exprimé en $2^{-\Delta\Delta Ct}$ (eau =0)

|  | J2 | J3 |
| --- | --- | --- |
| MODALITES | MOY. | MOY. |
| ESTER 1000 PPM | 39,3 | 19,2 |
| ESTER 100 PPM | 27,1 | 8,0 |
| ESTER 10 PPM | 21,2 | 14,3 |

L'induction des 28 gènes de défenses est donc forte, 2 et 3 jours après le traitement quelle que soit la concentration en ester d'acides gras. Pour les deux durées, 2 et 3 jours après le traitement, cette induction sera d'autant plus importante que la quantité en ester d'acides gras extraits des cutines de tomates sera importante. Cela permet de justifier la nécessité d'ajouter de manière exogène des monomères de cutines sous une forme ester pour surexprimer les gènes de défenses de la plante. 3 jours après le traitement, quelque soit la concentration en ester d'acide gras, la moyenne d'induction des gènes de défenses est 48.6% du niveau de celle à 2 jours.

Exemple 8 : Induction des défenses de plants de pommier à l'aide de la préparation de l'exemple 3 et de l'exemple 5 via la plateforme qPFD®

Les expériences sont menées selon la même procédure que les exemples 6 et 7 à la différence que des blocs de 20 plantes sont utilisés par produit. Chaque bloc est traité 2 fois avec le produit (J-4 et J0) jusqu'à ruissellement (70 ml/bloc de 20 plantes). Du peroxyde d'hydrogène est pulvérisé à J1 pour simuler une attaque de bio agresseurs. Le prélèvement des disques foliaires s'effectue 4 fois (J0, J1, J2 et J4). Les préparations des exemples 3 et 5 sont utilisées de manière à obtenir une solution contenant 10 000 mg/l d'acides gras issus de l'hydrolyse des cutines de tomates sous une forme sel de sodium (exemple 3) ou sel de lysine (exemple 5). La solution riche en L-Lysine de l'exemple 5 est aussi testés aux concentrations égales à la préparation du sel d'acide gras de l'exemple 5.

Les cumuls des inductions des 28 gènes de défense de pommier sont visualisés dans tableau 6.

Tableau 6 : Cumul des inductions des 28 gènes exprimé en $2^{-\Delta\Delta Ct}$ (eau =0)

| MODALITES | J1 | J3 |
|---|---|---|
| Préparation de l'exemple 3 | 52,2 | 26,6 |
| Préparation de l'exemple 5 | 30,7 | 28,4 |
| solution de L-Lysine de l'exemple 5 | 8,6 | 7,9 |

Les niveaux d'induction des 28 gènes de défense sur pommier pour les co-formulants, bien que non nuls, sont bien en deçà des niveaux obtenus avec les préparations des exemple 3 et 5 contenant les acides gras $\omega$-hydroxylés objets de la présente invention. 3 jours après le traitement, le niveau total des inductions induites par la préparation de l'exemple 5 reste à un niveau élevé.

3 jours après le traitement, l'induction des gènes de défenses est de près de 51% du niveau de celle à J1 pour le traitement à l'aide de la préparation de l'exemple 3 et de 92.5% pour le traitement à l'aide de la préparation de l'exemple 5. Cela démontre l'effet persistant et particulière de la composition de la composition 5 à base de sels de L-Lysine.

Le tableau 7 ci-dessous résume les valeurs d'induction obtenus à J1, et J3 plus spécifiquement sur les gènes protéiniques PR.

Tableau 7 : Sommes des résultats d'induction des gènes des protéines PR après 1 et 3 jours exprimé en log2 (eau =1)

| MODALITES | J1 | J3 |
|---|---|---|
| Préparation de l'exemple 3 | 163.9 | 43.8 |
| Préparation de l'exemple 5 | 47.3 | 56.9 |
| Solution de L-Lysine de l'exemple 5 | 14.8 | 12.2 |

La solution diluée de l'exemple 3 et la solution diluée de l'exemple 5, induisent à un niveau élevé certains gènes des protéines PR. En revanche, la solution riche en l-Lysine de l'exemple 5, en absence d'acide gras $\omega$-hydroxylés, n'induit pas ou faiblement les gênes des protéines PR. Son implication dans la stimulation des défenses des plantes traitées est donc très faible. Les résultats obtenus avec la préparation de l'exemple 5 sont donc la conséquence des fortes concentrations en acide gras $\omega$-hydroxylés dans la préparation. Aussi pour les gênes les plus marquants (protéines PR), la préparation à base de sels de lysine de l'exemple 5, montre de plus fortes inductions à J3 comparativement à la préparation de l'exemple 3 à partir des acides gras dans l'eau uniquement, permettant ainsi une protection de plus longue durée.

**Exemple comparatif 2 : Induction des défenses de plants de pommier à l'aide de la préparation de l'exemple 5 et de l'exemple comparatif 1 via la plateforme qPFD®**

Selon la même procédure que l'exemple 8 à la différence que chaque bloc est traité 2 fois avec le produit (J-4 et J0) et seulement 7 gènes (PR) sont testés. Les formulations des exemples 5 et exemple comparatif 1 sont utilisées à la concentration de 1000 mg/l d'acide gras totaux.

Le tableau 8 donne la somme des inductions pour les 7 gênes de protéines PR observés.

Tableau 8 : Cumul des inductions des 7 gènes de protéines PR exprimé en $2^{-\Delta\Delta Ct}$ (eau =0)

| TRAITEMENTS | J2 | J3 |
|---|---|---|
| Exemple 5 1000 ppm acides gras totaux | 4,5 | 10,6 |
| Exemple comparatif 1 1000 ppm acides gras totaux | 1,2 | 0,0 |

Comme pour l'exemple 8, la préparation de l'exemple 5 constituée par la formule d'un sel de lysine d'acide gras $\omega$-hydroxylés issus de cutine de tomate induit l'expression des gènes de défenses du pommier de manière plus importante 3 jours après application. Dans les mêmes conditions, l'expression des gènes induits par une préparation identique riche en acide ricinoléique (acide 12-hydroxy-9z-octadécénoïque), est très faible à nulle. L'application d'acide gras, autre que les acides gras ω-hydroxylés, ne permet donc pas l'induction des défenses naturelles.

**Exemple 9 : Test d'efficacité de la préparation selon l'exemple 5 sur le pathosystème Malus / *Venturia inaequalis.***

Des semis de pommier sont cultivés pendant 6 jours sous serre en conditions semi-contrôlées (20-25 °C, 16h de photopériode) puis sélectionnés au stade 4-6 feuilles. Trente plants sont traités avec les différents produits indiqués dans le tableau 9. La préparation de l'exemple 5, constituée une formulation de sels de lysine d'acide gras ω-hydroxylés issus de cutine de tomate, sera comparée d'une part à une préparation commerciale à base de 50% d'acidenzolar-S-méthyl, prise comme un produit de stimulation des défenses naturelles de référence (SDN-R), et d'une préparation à base de 250 g/l de Difénoconazole prise comme une référence fongicide (FONGI-R).

Tableau 9 : Description des produits testés et dose appliquée

| Produit | Substance active (SA) | Dose SA testé |
|---|---|---|
| Préparation de l'exemple 5 | Acide gras ω-hydroxylé | 1000 ppm |
| SDN-R | acibenzolar-S-méthyl | 500 ppm |
| FONGI-R | Difénoconazole | 150 ppm |
| Eau | | |

Les différents produits sont appliqués par pulvérisation et jusqu'à ruissellement. Dans les cas de la préparation de l'exemple 5 et du SDN-R, deux applications sont effectuées (J-5 et J-1). Dans le cas du produit FONGI-R, une seule application est effectuée (J-1).

A J0, les plants sont transférés dans une chambre climatisée dédiée pour l'expérimentation (18 °C nuit, 20 °C jour, humidité relative de 60-80%, 16h de photopériode). Une suspension de spores d'une souche *Venturia inaequalis* (souche 104- INRA) est préparée en mélangeant quelques grammes de feuilles tavelées dans de l'eau (100 ml). Après filtration et ajustement de la concentration finale, une suspension à 180 000 spores/ml est obtenue. Les plants sont traités avec la suspension de spores par pulvérisation jusqu'à ruissellement à l'aide d'un pulvérisateur manuel. Les plants sont ensuite maintenus en chambre climatique en conditions contrôlées (18 °C, humidité relative de 100%, obscurité) pendant 48 heures puis la culture se poursuit à 20 °C jour, 18 °C nuit, humidité relative 80% et photopériode 16h. Les plants sont analysés 19 jours après l'inoculation selon trois critères, l'incidence de la maladie, le pourcentage de protection et l'indice de sévérité.

**Incidence de la maladie** : L'incidence correspond au pourcentage des plants malades, présentant des symptômes caractéristiques de la tavelure (Chevalier M, Parisi L (1991) Etude d'un comportement atypique de Venturia inaequalis sur vitroplant micro bouturé de pommier Malus domestica ; Bulletin de la Société Botanique de France 138:117-122.).

Le pourcentage de protection est calculé selon la formule suivante à partir des valeurs de l'incidence.

$$\text{pourcentage} = \frac{(\text{incidence eau} - \text{incidence produit})}{\text{incidence eau}} * 100\%$$

Les résultats repris dans le tableau 10 correspondent aux incidences de la maladie et % de protection observée 19 jours après inoculation.

Tableau 10 : Résultats de protection obtenus

| Produit | Incidence | % protection |
|---|---|---|
| **Préparation de l'exemple 5** | **73.3 %** | **18.5%** |
| SDN-R | 70% | 22.2% |
| FONGI-R | 0% | 100% |
| Eau | 90% | 0% |

Indice de sévérité : La sévérité de la maladie correspond à une évaluation quantitative de la maladie. L'intensité de la maladie est mesurée en pourcentage de surface foliaire présentant des taches de nécrose ou de sporulation. Les pourcentages de surface foliaire présentant des nécroses sont notés selon la méthode de Croxall (Croxall HE, Gwynne DC, Jenkins JEE (1952) The rapid assessment of apple scab on leaves. Plant Pathology 1:39-41). L'indice de sévérité moyen est ensuite calculé selon la moyenne des notes obtenues sur les 30 plantes traitées.

Le pourcentage d'efficacité est calculé selon la formule suivante à partir des valeurs des indices de sévérité selon l'équation suivante :

$$\text{pourcentage efficacité} = \frac{(\text{indice eau} - \text{indice produit})}{\text{indice eau}} * 100\%$$

Les résultats de l'indice de sévérité 19 jours après l'inoculation sont rassemblés dans le tableau 11 ci-dessous.

Tableau 11 : Résultats des moyennes des indices de sévérité

| Produit | Indice de Sévérité moyen | % efficacité |
|---|---|---|
| Préparation de l'exemple 5 | 3.77 | 32.7% |
| SDN-R | 3.70 | 33.9% |
| FONGI-R | 0 | 100% |
| Eau | 5.60 | 0% |

La préparation de l'exemple 5, composée de sels de lysine d'acides gras ω-hydroxylés issus de cutine de tomates, permet une protection des plants de pommier contre la maladie tavelure de même niveau d'efficacité que la préparation commerciale à base de l'agent de stimulation des défenses acibenzolar-S-méthyl. Néanmoins à la différence de cette préparation témoin, la préparation à bases des extraits d'acide gras ω-hydroxylés de l'invention est d'origine végétale et provient de la valorisation de drèches industrielles, ce qui représente des atouts supplémentaires que la présente demande souhaite protéger.

Par ailleurs, au contraire des compositions de l'invention, les produits commerciaux SDN-R et FONGI-R testés ici présentent une toxicité importante pour l'Homme et l'environnement.

En effet, la fiche de données de sécurité du produit SDN-R indique les risques suivants :

- Xi, Irritant
- N, Dangereux pour l'environnement
- R36/38: Irritant pour les yeux et la peau.
- R43: Peut entraîner une sensibilisation par contact avec la peau.
- R50/53: Très toxique pour les organismes aquatiques, peut entraîner des effets néfastes à long terme pour l'environnement aquatique.

La fiche de données de sécurité du produit FONGI-R indique les risques suivants :

- N, Dangereux pour l'environnement
- R51/53: Toxique pour les organismes aquatiques, peut entraîner des effets néfastes à long terme pour l'environnement aquatique.

**Exemple 11 : Test d'efficacité de la préparation selon l'exemple 5 sur le pathosystème blé / *Mycosphaerella graminicola.***

Après 4 jours de pré-germination, une sélection homogène des plants de blé ont été transférés sur pots, à raison de 5 répétitions par modalité et placées en chambre phytotronique avec une température de 18 +/-2°C°, 16/8h de photopériode, 10 000 lux d'intensité lumineuse et 40% d'humidité. Quatre variétés, avec des niveaux de résistance à la septoriose allant de 4 à 7 sur une échelle de 9, ont été testées.

Tableau 12 : Variétés des blés utilisées pour l'essai

| Variété | Délégataire | Inscription | Résistance Septoriose |
|---|---|---|---|
| Alixan | LG | 05 | 4 |
| Altigo | LG | 07 | 5.5 |

(suite)

| Variété | Délégataire | Inscription | Résistance Septoriose |
|---|---|---|---|
| Cellule | FD | 12 | 6.5 |
| Hyfi | SU | 13 | 7 |
| Source : GEVES et Arvalis-Institut du Végétal, 2018 | | | |

Au stade 3 feuilles, les plantes sont pulvérisées avec la préparation de l'exemple 5, constituée d'une formulation de sels de lysine d'acide gras $\omega$-polyhydroxylés issus de cutine de tomate à une dose de 1000 ppm, qui sera comparée à une modalité control traitée avec de l'eau. 24 heures après l'application de l'éliciteur, les plantes ont été inoculées par spray, avec un inoculum de la souche IPO 323, de *mycosphaerella graminicola,* à raison de $10^6$ spores par feuille avec supplément de 0.05% de tween 80. Le taux d'humidité de la chambre a été élevé à 80%.

Deux méthodes d'analyses quantitatives de protection contre la septoriose ont été utilisées : une méthode basée sur la biologie moléculaire, à l'aide d'amorces spécifiques à un gène marqueur de la septoriose et par l'observation des symptômes de la maladie.

**Quantification par qPCR** :

La feuille F3, dernière feuille étalée lors de l'inoculation de septoriose est prélevée 17 jours après inoculation, plongée dans l'azote liquide pour une congélation immédiate et lyophilisée. L'ADN contenu dans les feuilles est extrait puis dilué à 40 ng/$\mu$L et amplifié via une PCR quantitative en temps réel (StepOnePlus, Applied Biosystems) suivant la méthode de Selim et al.,(2014), à l'aide du gène de $\beta$-tubuline spécifique de *Mycosphaerella graminicola* (GeneBank accession No. AY547264).

Tableau 13

| Amorces et sonde | Séquences |
|---|---|
| For-primer | GCCTTCCTACCCCACCATGT |
| Rev-primer | CCTGAATCGCGCATCGTTA |
| probe | FAM-TTACGCCAAGACATTC-MGB |

Les analyses qPCR sont exprimées en nombre de copies du gène de $\beta$-tubuline détectées dans l'échantillon étudié et ont été calibrées de $10^2$ à $10^7$ copies par une série de dilutions de l'amplicon de 63 paires de bases obtenu par cette amplification.

Le pourcentage de protection par détection via qPCR est calculé selon la formule suivante :

$$pourcentage = \frac{(nb\ de\ copies\ témoin\ eau - nb\ de\ copies\ modalité)}{nb\ de\ copies\ témoin\ eau} * 100\%$$

Les résultats repris dans le tableau 14 correspondent aux % de protection détectés par qPCR 17 jours après inoculation.

Tableau 14 : Niveau de protection de la préparation de l'exemple 5, 17 jours après inoculation du pathogène.

| Variété | Protection (%) | | | |
|---|---|---|---|---|
| | Alixan | Altigo | Cellule | Hyfi |
| **Niveau d'infection control eau** | 14 573 BCN$_{100ng}$ | 988 BCN$_{100ng}$ | 420 BCN$_{100ng}$ | 27 222 BCN$_{100ng}$ |
| **Produit** | | | | |
| Préparation de l'exemple 5 | 83.38% | 95.50% | 85.68% | 90.46% |
| Eau | 0% | 0% | 0% | 0% |

L'observation des symptômes de la septoriose a été réalisée 21 jours après inoculation et a été quantifiée par pourcentage des surfaces nécrosées avec sporulation correspondant à la formation de pycnides, de la feuille F3, dernière feuille étalée lors de l'inoculation de septoriose.

**Quantification par développement des symptômes :**

Le pourcentage de protection, correspondant à la sévérité de la maladie, par observation des symptômes est calculé selon la formule suivante :

$$pourcentage = \frac{(\%\ surfaces\ nécrosées\ témoin\ eau - \%\ surfaces\ nécrosées\ modalité)}{\%\ surfaces\ nécrosées\ témoin\ eau} * 100\%$$

Les résultats repris dans le tableau 15 correspondent aux % de protection observés 21 jours après inoculation.

Tableau 15 : Niveau de protection de la préparation de l'exemple 5, 21 jours après inoculation du pathogène.

| | Protection (%) | | |
|---|---|---|---|
| **Variété** | **Alixan** | **Cellule** | **Hyfi** |
| **Niveau d'infection control eau** | 25% | 7.5% | 15.5% |
| **Produit** | | | |
| Préparation de l'exemple 5 | 80% | 97.42% | 94.84% |
| Eau | 0% | 0% | 0% |

**Exemple 12 : Test d'efficacité de la préparation selon l'exemple 5 sur le pathosystème vigne / *Plasmopara viticola* (agent responsable du mildiou).**

L'essai est réalisé sur vignoble dans l'Aisne (Allemant 02320). Le vignoble est composé de Pinot noir, cépage sensible au mildiou (porte greffe 41B ; SO4 ; 3309), 1ère feuille de 2012. Les essais sont réalisés sur des modalités d'une ligne de 24 ceps par traitement (29m linéaire), en réalisant 3 répétitions par produit testé et chaque modalité étant séparée par une ligne de 24 ceps non contaminés. La contamination est réalisée à J0, à l'aide de 70 feuilles contaminées par *Plasmopara viticola* (Arbiotech), rincées dans 820 ml d'eau adoucie. La solution contaminante est ensuite pulvérisée, à l'aide d'un vaporisateur manuel, à raison de 9.4 ml par rameau. 7 rameaux par ligne d'essai sont ainsi contaminés. Avant la contamination l'humidité dans la parcelle est augmentée à l'aide de brumisateurs placés entre les rangs, avec 4 brumisations de 5 minutes. Sitôt la contamination, les rameaux contaminés sont ensachés afin d'augmenter localement le degré d'humidité et favoriser l'implantation du pathogène. 24H après la contamination, l'ensachage des rameaux est enlevé, en maintenant une brumisation de 2 fois 5 minutes.

Le programme de traitement des parcelles P1 (témoin contaminé, non traité), P2 (parcelles traitées par la composition de l'exemple 5), P3 (parcelle traitée par un programme fongicide traditionnel) est repris dans le tableau 16 suivant.

| | J-54 | J-25 | J-12 | J-1 | J0 | J+17 |
|---|---|---|---|---|---|---|
| | 26/04/2018 | 25/05/2018 | 07/06/2018 | 18/06/2018 | 19/06/2018 | 06/07/2018 |
| | | | | | | |
| P1 | Soufre (16.2 kg/ha) + cyazofamide (112.5 g/ha) + Disodium phosphonate (1125 g/ha) | Cymoxamil (120.1 g/ha) + fosétyl d'aluminium (1498.5 g/ha) + mancozèbe (1498.5 g/h) + cyflufénamide (25 g/ha) | - | - | Contamination | - |
| P2 | | | **Acides ω-hydroxylés (112.5 g/ha)** | **Acides ω-hydroxylés (112.5 g/ha)** | | **Acides ω-hydroxylés (112.5 g/ha)** |
| P3 | | | cyazofamide (112.5 g/ha) + Disodium phosphonate (1125 g/ha) | Amétoctradine (300 g/ha) + métirame (1100 g/ha) | | Cymoxamil (120.1 g/ha) + fosétyl d'aluminium (1498.5 g/ha) + mancozèbe (1498.5 g/h) |

Tableau 16 : Programme anti-mildiou réalisé sur les parcelles d'essais

En outre une couverture anti-mildiou est réalisée au-delà du programme suivant à l'aide de Tétraconazole (25 g/Ha / passage).

Après récolte, le rendement exprimé en kg par hectare est repris dans le tableau 17 ci-dessous.

Tableau 17 : Rendement des essais

|  | Rendement (Kg/ha) |
|---|---|
| P1 (TNT) | 10 353 |
| P2 (acides gras ω-hydroxylés de l'exemple 5) | 10 466 |
| P3 (fongicides) | 10 674 |

Durant la conduite de l'essai, la pluviométrie a été basse et la pression de la maladie faible. L'impact de la maladie ne représente alors que 321 kg/Ha par rapport au programme fongicide préconisé (P3-P1). Cette perte de rendement est limitée de 35% par l'usage de la préparation de l'exemple 3, et représente un gain de 113kg/ha.

**Exemple 13 : Test d'efficacité de la préparation selon l'exemple 5 sur le pathosystème *Vitis vinifera / Plasmopara viticola* en conditions contrôlées.**

Des semis de vigne obtenus à partir de pépins du cépage Chardonnay ont été cultivés pendant 6 semaines en conditions contrôlées (25 °C, 16h de photopériode) puis sélectionnés au stade 4 feuilles et transférés dans un module climatique dédié pour l'expérimentation au moment de l'inoculation (21°C jour, 19°C nuit, 16h photopériode). Vingt plants ont été traités avec les différents produits indiqués dans le tableau 18. La préparation de l'exemple 5, constituée une formulation de sels de lysine d'acide gras ω-hydroxylés issus de cutine de tomate, a été comparée d'une part à une préparation commerciale à base de COS-OGA (ChitoOlygoSaccharides et OligoGAlacturonides, détenus par la société PHYTOFEND), prise comme un produit de stimulation des défenses naturelles de référence (SDN-R2), et d'une Bouillie bordelaise prise comme une référence fongicide.

Tableau 18 : Description des produits testés et dose appliquée

| Produit | Substance active (SA) | Concentration testée |
|---|---|---|
| Préparation de l'exemple 5 | Acide gras ω-hydroxylé | 1 gr/l |
| SDN-R2 | COS-OGA | 8.54 ml/l |
| Bouillie Bordelaise | Cuivre (sulfate) | 18.75 gr/l |
| Eau |  |  |

Les différents produits ont été appliqués par pulvérisation avant le point de ruissellement. Dans les cas de la préparation de l'exemple 5 et du SDN-R2, deux applications ont été effectuées (J-4 et J-1). Dans le cas du produit FONGI-R, une seule application a été effectuée (J-1).

A J0, les plants ont été transférés dans une chambre climatisée dédiée pour l'expérimentation. Une suspension de spores d'une souche *Plasmora viticola* a été préparée à partir de feuilles contaminées rincées par de l'eau osmosée (100 ml). Après filtration et ajustement de la concentration finale, une suspension à $5 \cdot 10^4$ spores/ml a été obtenue. Des disques foliaires ont été réalisés à l'aide d'emporte-pièce à raison de 8 disques par boite de Petri. L'inoculum a ensuite été appliqué sur la face inférieure des disques à l'aide d'un pulvérisateur. Les boites ont été maintenues à température ambiante jusqu'à la lecture. La lecture a été réalisée 8 jours après inoculation en utilisant une échelle quantitative de sévérité de la maladie variant de 0 à 100% de sporulation recouvrant la surface des disques foliaires.

**Sévérité** de la maladie : La sévérité (ou l'intensité) a été obtenue en calculant la moyenne des notes (%) obtenues par modalité.

Incidence de la maladie : L'incidence correspond au pourcentage des plants malades, présentant des symptômes caractéristiques du mildiou.

Le pourcentage de protection a été calculé selon la formule suivante à partir des valeurs de sévérité.

$$\text{pourcentage} = \frac{(\text{Note témoin eau} - \text{Note produit})}{\text{Note témoin eau}} * 100\%$$

Les résultats repris dans le tableau 19 correspondent aux incidences de la maladie et % de protection observée 19 jours après inoculation.

Tableau 19 : Résultats de protection obtenus

| Produit | Incidence (%) | Sévérité (%) | % protection |
|---|---|---|---|
| **Préparation de l'exemple 5** | **100 %** | **37%** | **56%** |
| SDN-R2 | 100% | 43% | 48% |
| Bouillie Bordelaise | 25% | 1.9 | 98% |
| Eau | 100% | 83% | |

La préparation de l'exemple 5, composée de sels de lysine d'acides gras $\omega$-hydroxylés issus de cutine de tomates, a permis une protection des feuilles de vignes contre la maladie mildiou de même niveau d'efficacité que la préparation commerciale à base de l'agent de stimulation des défenses COS-OGA.

Néanmoins à la différence de cette préparation témoin SDN-R2, la préparation à bases des extraits d'acide gras $\omega$-hydroxylés de l'exemple 5 est d'origine végétale et provient de la valorisation de drèches industrielles, ce qui représente des atouts supplémentaires.

Par ailleurs, au contraire des compositions de l'exemple 5, la bouillie bordelaise présente une certaine toxicité pour l'environnement.

**Revendications**

1. Utilisation d'une composition comprenant au moins un sel d'acide gras $\omega$-hydroxylé linéaire ou ramifié ayant la formule $(HO)C_nH_{2n-m-2p}(OH)_mCOOM^+$,

   n étant un entier de 15 à 17,
   m étant un entier supérieur ou égal à 0, de préférence de 1 à 3, plus préférablement égal à 1, p représentant le nombre d'insaturations contenues dans ledit acide gras et étant un entier de 0 à 3, de préférence égal à 0,
   dans laquelle $M^+$ représente un acide aminé protoné notamment choisi parmi la L-lysine, la L-arginine, la L-histidine, la L-ornithine protonées ou un mélange desdits sels d'acide gras pour la défense des plantes contre des agents pathogènes.

2. Utilisation selon la revendication 1, d'une composition comprenant au moins un sel d'acide gras de formule $(HO)C_nH_{2n-m-2p}(OH)_mCOO^-M^+$,
   dans laquelle $M^+$ représente la L-Lysine protonée
   ou un mélange desdits sels d'acide gras.

3. Utilisation, selon l'une des revendications 1 à 2, dans laquelle la composition est utilisée en association avec au moins une autre composition pour le traitement des plantes, notamment en association avec un engrais, un biostimulant, un produit phytosanitaire, ou un produit de biocontrôle.

4. Utilisation, selon l'une des revendications 1 à 3, dans laquelle la composition est utilisée avant la contamination de la plante par un ou des agents pathogènes, ou avant l'apparition de symptômes caractéristiques générés par un stress biotique, ou avant l'attaque de la plante par un ou plusieurs insectes phytophages ou parasitaires.

5. Utilisation, selon l'une des revendications 1 à 4, dans laquelle la composition est utilisée pendant ou après la contamination de la plante par un ou des agents pathogènes, pendant ou après l'apparition des symptômes caractéristiques générés par un stress biotique, pendant ou après l'attaque de la plante par un ou plusieurs insectes phytophages ou parasitaires.

6. Utilisation, selon l'une des revendications 1 à 5, dans laquelle les plantes sont choisies parmi les *Poaceae* tels que le riz, le blé, le maïs, l'orge, l'avoine, le seigle, le sorgho, le millet, la canne à sucre, mais aussi des plantes ornementales comme les graminées à gazon, les miscanthus ; les *Rosaceae* tels que l'abricotier, l'amandier, le cerisier, le cognassier, le fraisier, le framboisier, le pêcher, le poirier, le pommier, le prunier et aussi les plantes ornementales comme les rosiers , les potentilles ; les *Vitaceae* tels que les vignes et notamment *Vitis Vinifera* ; les *Brassicacae* tels que les colzas, les moutardes, les choux, les navets, les radis ; les *Amaranthaceae* tels que les betteraves, les épinards ; les *Cucurbitaceae* tels que les concombres, les citrouilles, les courges, les melons, les pastèques ; les *Solanaceae* tels que les pommes de terre, les tomates, les aubergines, les poivrons, les piments, les tabacs, les pétunias ; les *Rutaceae* tels que les citronniers, les orangers les pamplemoussiers ; les *Asteraceae* tels que les chicorées dont l'endive, les laitues, les artichauts, les tournesols, mais aussi des plantes ornementales comme les chrysanthèmes, les dahlias, les asters ; les *Fabaceae* tels que les pois, les haricots, le soja, les lentilles, les arachides, les luzernes mais aussi des plantes ornementales comme les lupins, les mimosas ; les *Juglandaceae* tels que le noyer, les *Betulaceae* tels que le noisetier, les *Anacardiaceae* tels que le pistachier, le manguier, l'anarcardier, les *Fagaceae* tels que le châtaignier, les *Moraceae* tels que le figuier, le mûrier blanc, les *Oleaceae* tels que l'olivier, les *Actinidiaceae* tel que l'arbre à kiwi, les *Lauraceae* tels que l'avocatier, les *Musaceae* tels que le bananier, les *Rubiaceae* tels que la garance, le caféier, les *Theaceae* tels que le camellia, le théier, les *Sterculiaceae* tels que le cacaoyer ; les *Liliaceae* tels que les tulipes, les jacinthes, les narcisses ; les *Apiacea* tels que les persils, les céleris, les fenouils, les panais.

7. Utilisation, selon l'une des revendications 1 à 6, dans laquelle les pathogènes sont des champignons tels que notamment *Pyricularia spp* tels que *Magnaporte grisea* responsable de la pyriculariose des céréales, *Puccinia spp* tels que *puccinia triticina* responsable de la rouille du blé, *puccinia graminis* responsable des rouilles des céréales, *Botrytis sp* tels que *Botrytis cinerea* responsable de la pourriture grise sur vigne, tournesol, tomate ou fraise, *Oidium neolycopersici* responsable de l'oïdium de la tomate, *Phytophthora sp* tel que *Phytophthora infestans* responsable du mildiou de la pomme de terre et de la tomate , *Phytophtora cactorum* responsable de la chancre du collet sur pommier, *Plasmopara viticola* responsable du mildiou de la vigne, *Erysiphe necator* responsable de l'oïdium de la vigne, *Fusarium spp* responsable de la fusariose, notamment *f.rnivale, f.oxysporum, f.solani, f.germinearum, f.graminearum, Blumeria graminis* responsable du blanc des céréales, *Colletotrichum spp* notamment *Colletotrichum acutatum* responsable des anthracnoses sur fraisiers et oliviers, *Alternaria spp.* responsable de l'alternariose sur les feuilles de carottes et les pommes de terre, *Mycosphaerella spp.* notamment *M. graminicol (ou Zymoseptoria tritici)* responsable de la septoriose sur le blé et *Septoria lycopersici* responsable de le septoriose de la tomate, *Venturia sp* tel que *Venturia inaequalis* responsable de la tavelure du pommier, *Phomopsis spp.* notamment *Phomopsis viticola* responsable de l'excoriose du bois de la vigne, *Helminthosporium sp.* notamment *Helminthosporium avenae* responsable de la fonte des semis de l'avoine , *Monilia spp.* notamment *Monilia fructigena* responsable de la moniliose des arbres fruitiers notamment des prunes, *Cochliobolus sp. notamment Chochiobulus carbonum* (ou *Bipolaris zeicola*) responsable de l'helminthosporiose du maïs, *Sclerotinia sclerotiorum* responsable de la sclerotinia ou pourriture blanche sur colza, le tournesol, les haricots, la carotte, *Cercospora sp* tel que *cercospora beticola* responsable de la cercosporiose de la betterave, *Ramularia beticola* responsable de la ramulariose de la betterave, *Rhynchosporium spp* tel que *Rhynchosporium secalis* responsable de la maladie des taches brunes de l'orge, *Cladosporium sp* tel que *Cladosporium fulvum* responsable de la cladosporiose sur tomates, *Didymella sp* tel que *Didymella bryoniae* responsable de la chancre gommeux des cucurbitacées, *phoma sp* tels que *Phoma betae* responsable de la maladie du pied noir de la betterave, *Phoma batata* sur patate douce, *Phoma solani* responsable de nécroses racinaires (fonte de semis), *Aspergillus sp.* tel que *Aspergillus ochraceus* pouvant produire des toxines dans les grains de céréales, *Ascophyta sp* tel que *Ascophyta tritici* sur blé, *Stemphylium sp* tel que *Ssolani, S. lycopersici* responsable de la stemphyliose sur tomates, *Stemphylium vesicarium (ou pleospora allii)* responsable de la stemphyliose du poirier, *Glomerella cingulata* responsable de l'anthracnose sur pommier et poirier, *Plasmopara viticola* responsable du mildiou de la vigne, *Bremia lactucae* pour le mildiou de la laitue, *Peronospora sp.* responsable des mildiou sur betterave, épinard, luzerne, chou, tabac, soja et pois, *Pythium sp.* responsable de la fonte des semis ou pourriture racinaire de la betterave, poivrons, courges, chrysanthèmes, gazon, *Diaporthe sp.* tel que *Diaporthe ampelina* provoquant des dépérissements des pieds de vigne, *diaporthe phaseolorum* responsable de la phomopsis du soja, *Elsinoe sp* tel qu'*Elsinoe ampelina* responsable de l'anthracnose de la vigne, *Verticilium sp.* tel que *Verticillium dahliae* responsable de la verticilliose sur tournesol, *Pyrenopezzia sp* tel que *Pyrenopezzia brassicae* responsable de la cylindrosporiose du colza, des bactéries tels que notamment *Erwinia sp* tels que *Erwinia amylovara* responsable du feu bactérien du poirier et du pommier, *pseudomonas sp* tel que *pseudomonas syringae* responsable de chancres sur les arbres fruitiers et de la moucheture bactérienne des tomates, *Xanthomonas sp* tel que *Xanthomonas arboricola* responsable des taches bactériennes sur pêcher, la maladie des tâches noir sur noyer, les virus tels que notamment les virus de la mosaïque du concombre, les virus de la mosaïque du chou-fleur, les virus A, X,S, M et Y de la pomme de terre, les virus mosaïque de la tomate, virus de la moucheture de la fraise, les insectes piqueurs-suceurs exophages comme les pucerons tels que le puceron cendré du pommier (*Dysaphis plantaginea),* puceron vert du pommier (*Aphis pomi),* puceron lanigère (*Eriosoma lanigerum),* puceron des galles rouges (*Dysaphis spp),* puceron vert des citrus *(Aphis spiraecola),* les cicadelles tels que la cicadelle de la pomme de terre (*Empoasca fabae),* cicadelle des grillures de la vigne (*Empoasca vitis),* les psylles tels que la psylle du pommier (*Cacopsylla mali),* du poirier (*Cacopsylla pyri),* de l'olivier (*Euphyllura olivina),* des agrumes (*Diaphorina citri),* du buis (*Psylla buxi*) , les punaises, les cochenilles, les tingidae, les aleurodes tels que l'aleurode du tabac (*Bemisia tabaci*), l'aleurode floconneux des citrus (*Aleurothrixus floccosus*), l'aleurode noir de l'olivier (*Aleurolobus olivinus*), l'aleurode spriralant (*Aleurodicus dispersus),les* thrips tels que les thrips des céréales (*Limothrips cerealium ou dentiocornis*), les thrips du pêcher (*Thrips meridionalis),* les thrips du pois (*Frankliniella robusta),* les insectes foreurs comme les lépidoptères, les coléoptères, les diptères, les insectes galligènes.

8. Utilisation, selon l'une des revendications 1 à 7, dans laquelle la composition est administrée par pulvérisation sur la plante entière ou le feuillage, à une concentration de 0,1 mg à 100 kg d'acide gras ω-hydroxylé par hectare traité, de préférence de 10 mg à 10 kg par hectare, de préférence encore 100mg à 1kg par hectare.

9. Composition phytosanitaire comprenant un mélange de sels d'acides gras ω-hydroxylés linéaires ou ramifiés ayant la formule $(HO)C_nH_{2n-m-2p}(OH)_mCOOM^+$,

n étant un entier de 15 à 17,
m étant un entier supérieur ou égal à 0, de préférence de 1 à 3, plus préférablement égal à 1, p représentant le nombre d'insaturations contenues dans ledit acide gras et étant un entier de 0 à 3, de préférence égal à 0,
dans laquelle $M^+$ représente un acide aminé protoné notamment choisi parmi la L-lysine, la L-arginine, la L-histidine, la L-ornithine protonées ou un mélange desdits sels d'acide gras.

**Patentansprüche**

1. Verwendung einer Zusammensetzung, umfassend mindestens ein Salz einer linearen oder verzweigten ω-hydroxylierten Fettsäure mit der Formel $(HO) C_nH_{2n-m-2p}(OH)_mCOOM^+$,

wobei n eine ganze Zahl von 15 bis 17 ist,
m eine ganze Zahl größer oder gleich 0 , vorzugsweise von 1 bis 3, noch bevorzugter gleich 1 ist,
p für die Anzahl der Ungesättigtheiten steht, die in der Fettsäure enthalten sind, und eine ganze Zahl von 0 bis 3, vorzugsweise gleich 0 ist
wobei $M^+$ für eine protonierte Aminosäure steht, insbesondere ausgewählt aus protoniertem L-Lysin, L-Arginin, L-Histidin, L-Ornithin oder einer Mischung dieser Fettsäuresalze, zum Schutz von Pflanzen gegen Krankheitserreger.

2. Verwendung nach Anspruch 1 einer Zusammensetzung, umfassend mindestens ein Fettsäuresalz mit der Formel $(HO)C_nH_{2n-m-2p}(OH)_mCOO^-M^+$,
wobei $M^+$ für protoniertes L-Lysin steht, oder einer Mischung dieser Fettsäuresalze.

3. Verwendung nach einem der Ansprüche 1 bis 2, wobei die Zusammensetzung in Kombination mit mindestens einer weiteren Zusammensetzung zur Behandlung von Pflanzen verwendet wird, insbesondere in Kombination mit einem Düngemittel, einem Biostimulans, einem Pflanzenschutzmittel oder einem Produkt zur biologischen Schädlingsbekämpfung.

4. Verwendung nach einem der Ansprüche 1 bis 3, wobei die Zusammensetzung vor der Ansteckung der Pflanze durch einen oder mehrere Krankheitserreger, oder vor dem Auftreten charakteristischer Symptome, die durch biotischen Stress hervorgerufen werden, oder vor dem Befall der Pflanze durch ein oder mehrere pflanzenfressende oder parasitäre Insekten verwendet wird.

5. Verwendung nach einem der Ansprüche 1 bis 4, wobei die Zusammensetzung während oder nach der Ansteckung der Pflanze durch einen oder mehrere Krankheitserreger, während oder nach dem Auftreten charakteristischer Symptome, die durch biotischen Stress hervorgerufen werden, oder während oder nach dem Befall der Pflanze durch ein oder mehrere pflanzenfressende oder parasitäre Insekten verwendet wird.

6. Verwendung nach einem der Ansprüche 1 bis 5, wobei die Pflanzen ausgewählt sind aus den *Poaceae* wie Reis, Weizen, Mais, Gerste, Hafer, Roggen, Sorghum, Hirse, Zuckerrohr, aber auch Zierpflanzen wie Rasengräsern und Pampasgras; den *Rosaceae* wie Aprikosenbaum, Mandelbaum, Kirschbaum, Quittenbaum, Erdbeerpflanze, Himbeerstrauch, Pfirsichbaum, Birnbaum, Apfelbaum, Pflaumenbaum sowie Zierpflanzen wie Rosen, Fingerstrauch; den *Vitaceae* wie Weinreben und insbesondere *Vitis Vinifera;* den *Brassicaceae* wie Raps, Senf, Kohl, Rüben, Rettichen; den *Amaranthaceae* wie Rüben, Spinat; den *Cucurbitaceae* wie Gurken, Kürbissen, Melonen, Wassermelonen; den *Solanaceae* wie Kartoffeln, Tomaten, Auberginen, Paprika, Chili, Tabak, Petunien; den *Rutaceae* wie Zitronen-, Orangen- und Grapefruitbäumen; den *Asteraceae* wie Chicorée, darunter Endivie, Salaten, Artischocken, Sonnenblumen, aber auch Zierpflanzen wie Chrysanthemen, Dahlien, Astern; den *Fabaceae* wie Erbsen, Bohnen, Soja, Linsen, Erdnüssen, Luzerne, aber auch Zierpflanzen wie Lupinen, Mimosen; den *Juglandaceae* wie dem Walnussbaum, den *Betulaceae* wie dem Haselnussstrauch, den *Anacardiaceae* wie dem Pistazienbaum, dem Mangobaum, dem Cashewbaum, den *Fagaceae* wie der Kastanie, den *Moraceae* wie dem Feigenbaum, dem weißen Maulbeerbaum, den *Oleaceae* wie dem Olivenbaum, den *Actinidiaceae* wie dem Kiwibaum, den Lauraceae wie dem Avocadobaum, den *Musaceae* wie der Bananenstaude, den *Rubiaceae* wie der Färberdistel, dem Kaffeebaum, den *Theaceae* wie der Kamelie, dem Teestrauch, den *Sterculiaceae* wie dem Kakaobaum; den *Liliaceae* wie Tulpen, Hyazinthen, Narzissen; den *Apiaceae* wie Petersilie, Sellerie, Fenchel, Pastinaken.

7. Verwendung nach einem der Ansprüche 1 bis 6, wobei die Pathogene Pilze sind, wie insbesondere *Pyricularia spp,* wie *Magnaporte grisea,* der für Brandkrankheiten bei Getreide verantwortlich ist, *Puccinia spp* wie *Puccinia triticina,* der für den Weizenrost verantwortlich ist, *Puccinia graminis,* der für Getreiderost verantwortlich ist, *Botrytis sp* wie *Botrytis cinerea,* der für die Graufäule an Weinreben, Sonnenblumen, Tomaten oder Erdbeeren verantwortlich ist, *Oidium neolycopersici,* der für den Mehltau der Tomate verantwortlich ist, *Phytophthora sp* wie *Phytophthora infestans,* der für die Kartoffel- und Tomatenfäule verantwortlich ist, *Phytophthora cactorum,* der für den Wurzelhalskrebs am Apfelbaum verantwortlich ist, *Plasmopara viticola,* der für den Mehltau der Rebe verantwortlich ist, *Erysiphe necator,* der für den Echten Mehltau der Rebe verantwortlich ist, *Fusarium spp,* der für die Fusariose verantwortlich ist, insbesondere *F. nivale, F. oxysporum, F. solani, F. germinearum, F. graminearum, Blumeria graminis,* der für den Echten Mehltau bei Getreide verantwortlich ist, *Colletotrichum spp,* insbesondere *Colletotrichum acutatum,* der für Anthraknose an Erdbeeren und Olivenbäumen verantwortlich ist, *Alternaria spp.* Der für Alternaria-Blattflecken an Karottenblättern und Kartoffeln verantwortlich ist, *Mycosphaerella spp.* insbesondere M. *graminicol* (oder *Zymoseptoria tritici),* der für die Septoria-Blattfleckenkrankheit bei Weizen verantwortlich ist, und *Septoria lycopersici,* der für die Septoria-Blattfleckenkrankheit bei Tomaten verantwortlich ist, *Venturia sp,* wie z. B. *Venturia inaequalis,* der für den Apfelbaum-Schorf verantwortlich ist, *Phomopsis spp.* insbesondere *Phomopsis viticola,* der für die Holzschorfkrankheit der Rebe verantwortlich ist, *Helminthosporium sp.* insbesondere *Helminthosporium avenae,* der für die Keimlingsfäule bei Hafer verantwortlich ist, *Monilia spp.* insbesondere *Monilia fructigena,* der für die Monilose bei Obstbäumen, insbesondere bei Pflaumen, verantwortlich ist, *Cochliobolus sp.,* insbesondere *Cochliobolus carbonum* (oder *Bipolaris zeicola),* der für die Helminthosporiose bei Mais verantwortlich ist, *Sclerotinia sclerotiorum,* der für die Sclerotinia- oder Weißfäule bei Raps, Sonnenblumen, Bohnen und Karotten verantwortlich ist, *Cercospora sp* wie *Cercospora beticola,* der für die Cercosporiose der Rübe verantwortlich ist, *Ramularia beticola,* der für die Ramulariose der Rübe verantwortlich ist, *Rhynchosporium spp* wie *Rhynchosporium secalis,* der für die Braunfleckigkeit der Gerste verantwortlich ist, *Cladosporium sp* wie *Cladosporium fulvum,* das für die Cladosporiose an Tomaten verantwortlich ist, *Didymella sp* wie *Didymella bryoniae,* der für den Gummikanker bei Kürbisgewächsen verantwortlich ist, *Phoma sp* wie *Phoma betae,* der für die Schwarzfäule der Rübe verantwortlich ist, *Phoma batata* an Süßkartoffeln, *Phoma solani,* der für Wurzelnekrosen (Keimlingsfäule) verantwortlich ist, *Aspergillus sp.* wie *Aspergillus ochraceus,* der in Getreidekörnern Toxine produzieren kann, *Ascophyta sp* wie *Ascophyta tritici* an Weizen, *Stemphylium sp* wie S. solani, S. lycopersici, der für die Stemphyliose bei Tomaten verantwortlich ist, *Stemphylium vesicarium (oder Pleospora allii),* der für die Stemphyliose bei Birnbäumen verantwortlich ist, *Glomerella cingulata,* der für die Anthraknose bei Apfel- und Birnbäumen verantwortlich ist, *Plasmopara viticola,* der für den Falschen Mehltau der Rebe verantwortlich ist, *Bremia lactucae* für den Mehltau an Salat, *Peronospora sp.,* der für den Mehltau an Rüben, Spinat, Luzerne, Kohl, Tabak, Soja und Erbsen verantwortlich ist, *Pythium sp.,* der für die Keimlingsfäule oder Wurzelfäule bei Rüben, Paprika, Kürbissen, Chrysanthemen und Rasengräsern verantwortlich ist, *Diaporthe sp.* wie *Diaporthe ampelina,* der das Absterben von Rebstöcken verursacht, *Diaporthe phaseolorum,* der für die Phomopsis-Krankheit bei Sojabohnen verantwortlich ist, *Elsinoe sp* wie *Elsinoe ampelina,* der für die Anthraknose der Rebe verantwortlich ist, *Verticillium sp.* wie *Verticillium dahliae,* der für die Verticillium-Welke bei Sonnenblumen verantwortlich ist, *Pyrenopezzia sp* wie *Pyrenopezzia brassicae,* der für die Cylindrosporiose bei Raps verantwortlich ist, Bakterien wie insbesondere *Erwinia sp* wie *Erwinia amylovara,* die für den Feuerbrand bei Birnen- und Apfelbäumen verantwortlich sind, *Pseudomonas sp* wie *Pseudomonas syringae,* die für Krebsgeschwüre an Obstbäumen und die bakterielle Fleckenkrankheit bei Tomaten verantwortlich sind, *Xanthomonas sp* wie *Xanthomonas arboricola,* die für bakterielle Flecken am Pfirsichbaum, die Schwarzfleckenkrankheit am Walnussbaum verantwortlich sind, Viren wie insbesondere das Gurkenmosaikvirus, das Blumenkohlmosaikvirus, die Viren A, X, S, M und Y der Kartoffel, die Tomatenmosaikviren, das Erdbeerfleckenvirus , sowie exophagische stechsaugende Insekten wie Blattläuse, darunter die Apfelblattlaus (Dysaphis plantaginea), die Grüne Apfelblattlaus *(Aphis pomi),* die Wollblattlaus (*Eriosoma lanigerum*), die Rote Gallenblattlaus (*Dysaphis spp),* die Grüne Zitrusblattlaus (*Aphis spiraecola*), Zikaden wie die Kartoffelzikade (*Empoasca fabae*), die Weinbergzikade (*Empoasca vitis*), Blattflöhe wie der Apfelblattfloh (*Cacopsylla mali*), der Birnenblattfloh (*Cacopsylla pyri*), der Olivenblattfloh (*Euphyllura olivina,* der Zitrusblattfloh (*Diaphorina citri*) und der Buchsbaumblattfloh (*Psylla buxi*), Wanzen, Schildläuse, Spinnraupen, Weiße Fliegen wie die Tabak-Weiße Fliege (*Bemisia tabaci),* die flockige Zitrus-Weiße Fliege (*Aleurothrixus floccosus*), die schwarze Olivenblattfliege (*Aleurolobus olivinus*), die spiralförmige Blattfliege (*Aleu-*

*rodicus dispersas*), Thripse wie Getreidethipse (*Limothrips cerealium oder dentiocomis*), Pfirsichthripse (*Thrips meridionalis*), Erbsenthripse (*Frankliniella robusta*), Bohrinsekten wie Schmetterlinge, Käfer, Zweiflügler und Gallinsekten.

8. Verwendung nach einem der Ansprüche 1 bis 7, wobei die Zusammensetzung durch Besprühen der gesamten Pflanze oder des Laubs in einer Konzentration von 0,1 mg bis 100 kg ω-hydroxylierter Fettsäure pro behandeltem Hektar, vorzugsweise von 10 mg bis 10 kg pro Hektar, noch bevorzugter von 100 mg bis 1 kg pro Hektar, aufgebracht wird.

9. Pflanzenschutzmittel, umfassend eine Mischung aus Salzen linearer oder verzweigter ω-hydroxylierter Fettsäuren mit der Formel $(HO)C_nH_{2n-m-2p}(OH)_mCOOM^+$,

wobei n eine ganze Zahl von 15 bis 17 ist,
m eine ganze Zahl größer oder gleich 0, vorzugsweise von 1 bis 3, noch bevorzugter gleich 1 ist,
p für die Anzahl der Ungesättigtheiten steht, die in der Fettsäure enthalten sind, und eine ganze Zahl von 0 bis 3, vorzugsweise gleich 0 ist
wobei $M^+$ für eine protonierte Aminosäure steht, insbesondere ausgewählt aus protoniertem L-Lysin, L-Arginin, L-Histidin, L-Ornithin oder einer Mischung dieser Fettsäuresalze.

**Claims**

1. Use of a composition comprising at least one linear or branched ω-hydroxylated fatty acid derivative, having the formula $(HO)C_nH_{2n-m-2p}(OH)_mCOOM^+$,

n being an integer 15 to 17,
m being an integer greater than or equal to 0, preferably from 1 to 3, more preferably equal to 1,
p representing the number of unsaturations contained in said fatty acid and being an integer from 0 to 3, preferably equal to 0,
in which $M^+$ represents a protonated amino acid chosen in particular from protonated L-lysine, protonated L-arginine, protonated L-histidine, protonated L-ornithine or a mixture of said fatty acid salts,
for the defense of plants against pathogens.

2. Use according to claim 1, of a composition comprising at least one fatty acid salt of formula $(HO)C_nH_{2n-m-2p}(OH)_mCOO^-M^+$,

in which $M^+$ represents protonated L-Lysine
or a mixture of said fatty acid salts.

3. Use, according to any of claims 1 to 2, in which the composition is used in combination with at least another composition for the treatment of plants, in particular in combination with a fertilizer, a biostimulant, a phytosanitary product, or a biocontrol product.

4. Use, according to any of claims 1 to 3, in which the composition is used before the contamination of the plant by one or several pathogenic agents, or before the appearance of characteristic symptoms generated by a biotic stress, or before the attack on the plant by one or several phytophagous or parasitic insects.

5. Use according to one of claims 1 to 4, in which the composition is used during or after the contamination of the plant by one or several pathogenic agents, during or after the appearance of characteristic symptoms generated by a biotic stress, during or after the attack on the plant by one or several phytophagous or parasitic insects.

6. Use according to any of claims 1 to 5, in which the plants are chosen from *Poaceae* such as rice, wheat, corn, barley, oats, rye, sorghum, millet , sugar cane, but also ornamental plants such as lawn grasses and miscanthus; *Rosaceae* such as the apricot tree, the almond tree, the cherry tree, the quince tree, the strawberry tree, the raspberry tree, the peach tree, the pear tree, the apple tree, the plum tree and also ornamental plants such as rose bushes, potentillas; *Vitaceae* such as vines and in particular *Vitis Vinifera; Brassicas* such as rapeseed, mustards, cabbages, turnips, radishes; *Amaranthaceae* such as beets, spinach; *Cucurbitaceae* such as cucumbers, pumpkins, squash, melons, watermelons; *Solanaceae* such as potatoes, tomatoes, eggplants, peppers, chili peppers, tobacco, petunias;

*Rutaceae* such as lemon trees, orange trees and grapefruit trees; *Asteraceae* such as chicory including endive, lettuce, artichokes, sunflowers, but also ornamental plants such as chrysanthemums, dahlias, asters; *Fabaceae* such as peas, beans, soya, lentils, peanuts, alfalfa but also ornamental plants such as lupins and mimosas; *Juglandaceae* such as walnut, *Betulaceae* such as hazel, *Anacardiaceae* such as pistachio, mango, cashew, *Fagaceae* such as chestnut, *Moraceae* such as fig, white mulberry, *Oleaceae* such as the olive tree, *Actinidiaceae* such as the kiwi tree, *Lauraceae* such as the avocado tree, *Musaceae* such as the banana tree, *Rubiaceae* such as madder, the coffee tree, *Theaceae* such as the camellia, the tea tree, *Sterculiaceae* such as the cocoa tree; *Liliaceae* such as tulips, hyacinths, daffodils; *Apiacea* such as parsleys, celeries, fennels, parsnips.

7. Use according to any of claims 1 to 6, in which the pathogens are fungi such as in particular *Pyricularia spp* such as *Magnaporte grisea* responsible for cereal blast, *Puccinia spp* such as *Puccinia triticina* responsible for wheat rust, *puccinia graminis* responsible for cereal rusts, *Botrytis sp* such as *Botrytis cinerea* responsible for gray rot on vines, sunflowers, tomatoes or strawberries, *Oidium neolycopersici* responsible for tomato oidium, *Phytophthora sp* such as *Phytophthora infestans* responsible for mildew of potato and tomato, *Phytophtora cactorum* responsible for crown canker on apple trees, *Plasmopara viticola* responsible for vine mildew, *Erysiphe necator* responsible for vine oidium, *Fusarium spp* responsible for fusarium wilt, particularly *f.nivale* , *f.oxysporum, f.solani, f.germinearum, f.graminearum, Blumeria graminis* responsible for white cereals, *Colletotrichum spp* in particular *Colletotrichum acutatum* responsible for anthracnoses on strawberries and olive trees, *Alternaria spp.* responsible for alternaria of carrot leaves and potatoes, *Mycosphaerella spp.* notably *M. graminicol* (or *Zymoseptoria tritici*) responsible for septoria on wheat and *Septoria lycopersici* responsible for tomato septoria, *Venturia sp* such as *Venturia inaequalis* responsible for apple scab, *Phomopsis spp.* notably *Phomopsis viticola* responsible for excoriosis of vine wood, *Helminthosporium sp.* notably *Helminthosporium avenae* responsible for oat damping off, *Monilia spp.* notably *Monilia fructigena* responsible for moniliosis of fruit trees, particularly plums, *Cochliobolus sp.* notably *Chochiobulus carbonum* (or *Bipolaris zeicola)* responsible for helminthosporiosis of corn, *Sclerotinia sclerotiorum* responsible for sclerotinia or white rot on rapeseed, sunflower, beans, carrots, *Cercospora sp* such as *Cercospora beticola* responsible for cercospora beticola , *Ramularia beticola* responsible for ramulariosis of beet, *Rhynchosporium spp* such as *Rhynchosporium secalis* responsible for brown spot disease of barley, *Cladosporium sp* such as *Cladosporium fulvum* responsible for cladosporiosis on tomatoes, *Didymella sp* such as *Didymella bryoniae* responsible for gummy canker of cucurbits, *phoma sp* such as *Phoma betae* responsible for black foot disease of beets, *Phoma batata* on sweet potato, *Phoma solani* responsible for root necrosis (damping off), *Aspergillus sp.* such as *Aspergillus ochraceus* which can produce toxins in cereal grains, *Ascophyta sp* such as *Ascophyta tritici* on wheat, *Stemphylium sp* such as *S.solani, S. lycopersici* responsible for stemphyliosis on tomatoes, *Stemphylium vesicarium* (or *pleospora allii)* responsible for pear stemphyliosis, *Glomerella cingulata* responsible for anthracnose on apple and pear trees, *Plasmopara viticola* responsible for vine mildew, *Bremia lactucae* for lettuce mildew, *Peronospora sp.* responsible for mildew of beets, spinach, alfalfa, cabbage, tobacco, soybeans and peas, *Pythium sp.* responsible for damping off or root rot of beets, peppers, squash, chrysanthemums, grass, *Diaporthe sp.* such as *Diaporthe ampelina* causing dieback of vines, *Diaporthe phaseolorum* responsible for soybean phomopsis, *Elsinoe sp* such as *Elsinoe ampelina* responsible for vine anthracnose, *Verticilium sp.* such as *Verticillium dahliae* responsible for verticillium wilt on sunflowers, *Pyrenopezzia sp* such as *Pyrenopezzia brassicae* responsible for cylindrosporiosis of rapeseed, bacteria such as *Erwinia sp* such as *Erwinia amylovara* responsible for fire blight on pear and apple trees, *pseudomonas sp* such as *pseudomonas syringae* responsible for cankers on fruit trees and bacterial speck of tomatoes, *Xanthomonas sp* such as *Xanthomonas arboricola* responsible for bacterial spots on peach, black spot disease on walnut, viruses such as cucumber mosaic viruses, cauliflower mosaic viruses, potato viruses A, X, S, M and Y, tomato mosaic viruses, strawberry speck viruses, exophagous biting-sucking insects such aphids such as the gray apple aphid *(Dysaphis plantaginea),* green apple aphid *(Aphis pomi),* woolly aphid *(Eriosoma lanigerum),* red gall aphid *(Dysaphis spp),* green citrus aphid *(Aphis spiraecola),* leafhoppers such as the potato leafhopper *(Empoasca fabae),* vine leafhopper *(Empoasca vitis),* psyllids such as the apple psylla *(Cacopsylla mali),* pear tree *(Cacopsylla pyri),* olive tree *(Euphyllura olivina),* citrus fruits *(Diaphorina citri),* boxwood *(Psylla buxi),* bedbugs, scale insects, tingidae, whiteflies such as the tobacco whitefly *(Bemisia tabaci),* the citrus flaky whitefly *(Aleurothrixus floccosus)* , the black olive whitefly *(Aleurolobus olivinus),* the spray whitefly *(Aleurodicus dispersus),* thrips such as cereal thrips *(Limothrips cerealium* or *dentiocornis),* peach thrips *(Thrips meridionalis),* thrips of pea *(Frankliniella robusta),* boring insects such as lepidoptera, beetles, dipterans, galligenic insects.

8. Use according to any of claims 1 to 7, in which the composition is administered by spraying onto the entire plant or foliage, at a concentration of 0.1 mg to 100 kg of ω-hydroxylated fatty acid per treated hectare, preferably from 10 mg to 10 kg per hectare, more preferably from 100 mg to 1 kg per hectare.

9. Phytosanitary composition comprising at least one linear or branched ω-hydroxylated fatty acid derivative, said derivative having the formula $(HO)C_nH_{2n-m-2p}(OH)_mCOOM^+$,

n being an integer from 15 to 17,

m being an integer greater than or equal to 0, preferably from 1 to 3, more preferably equal to 1, p representing the number of unsaturations contained in said fatty acid and being an integer from 0 to 3, preferably equal to 0,

in which $M^+$ represents a protonated amino acid chosen in particular from protonated L-lysine, protonated L-arginine, protonated L-histidine, protonated L-ornithine or a mixture of said fatty acid salts.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2004010782 A2
- EP 11072009 A
- WO 2011161388 A

### Littérature non-brevet citée dans la description

- **GOZZO**. *J. Agric. Food Chem.*, 2003, vol. 51, 4487-4503
- Biology of plant cuticle. **MARKUS RIEDERER**. Annual Plant Reviews. Wiley-Blackwell, 2006, vol. 23
- **FICH** ; **SEGERSON** ; **ROSE**. *Annu. Rev. Plant Biol.*, 2016, vol. 2016 (67), 207-33
- **FICH et al.** *Annu. Rev. Plant Biol.*, 2016, vol. 67, 207-33
- **SERANO et al.** *Frontiers in Plante Science*, June 2014, vol. 5
- **SCHWEIZER et al.** *Physiological and Molecular Plant Pathology*, 1996, vol. 49, 103-120
- **BUXDORF et al.** *Plant Mol Biol*, 2014, vol. 84, 34-47
- **PROST et al.** *Plant Physiology*, December 2005, vol. 139, 1902-1913
- **BESSIRE et al.** *The EMBO Journal*, 2007, vol. 26 (8)
- **CHEVALIER M** ; **PARISI L**. Etude d'un comportement atypique de Venturia inaequalis sur vitroplant micro bouturé de pommier Malus domestica. *Bulletin de la Société Botanique de France*, 1991, vol. 138, 117-122
- **CROXALL HE** ; **GWYNNE DC** ; **JENKINS JEE**. The rapid assessment of apple scab on leaves. *Plant Pathology*, 1952, vol. 1, 39-41
- GeneBank, AY547264